# EUROPEAN PATENT SPECIFICATION

(11) **EP 4 008 423 B1**
(45) Date of publication and mention of the grant of the patent: **03.01.2024**
(21) Application number: 21158848.8
(22) Date of filing: 23.02.2021
(51) Int. Cl.: B01D 53/04, B01D 47/14, B01D 50/00, B01D 53/047, B01D 53/26

(54) **ENERGY-SAVING PROCESS SYSTEM FOR PURIFYING AND RECYCLING OXYGEN FROM HIGH-TEMPERATURE OXYGEN-ENRICHED FLUE GAS AND PROCESS THEREOF**
ENERGIESPARENDES PROZESSSYSTEM ZUM REINIGEN UND RECYCLEN VON SAUERSTOFF AUS MIT SAUERSTOFF ANGEREICHERTEM HOCHTEMPERATURRAUCHGAS UND VERFAHREN DAFÜR
SYSTÈME DE TRAITEMENT ÉCONOME EN ÉNERGIE POUR PURIFIER ET RECYCLER L'OXYGÈNE DE GAZ DE COMBUSTION ENRICHIS EN OXYGÈNE À HAUTE TEMPÉRATURE ET PROCÉDÉ ASSOCIÉ

(30) Priority: 02.12.2020 CN 202011403752
(43) Date of publication of application: 08.06.2022
(73) Proprietor: Chengdu Yizhi Technology Co., Ltd., Chengdu, Sichuan 610000 (CN)
(72) Inventor: ZENG, Ke, Chengdu, Sichuan 610000 (CN); YANG, Jiongliang, Chengdu, Sichuan 610000 (CN); LI, Zhendong, Chengdu, Sichuan 610000 (CN); LI, Wei, Chengdu, Sichuan 610000 (CN); HU, Xuekui, Chengdu, Sichuan 610000 (CN); YU, Hao, Chengdu, Sichuan 610000 (CN); LIANG, Dong, Chengdu, Sichuan 610000 (CN); LIANG, Yong, Chengdu, Sichuan 610000 (CN); WANG, Yi, Chengdu, Sichuan 610000 (CN); ZOU, Kang, Chengdu, Sichuan 610000 (CN)
(74) Representative: JD&P Patent Attorneys Joanna Dargiewicz & Partners

(56) References cited:
- WO-A1-2013/052325
- CN-A- 108 211 648
- CN-A- 108 786 371

## Description

### TECHNICAL FIELD

The present disclosure relates to the field of gas separation technologies and gas purification, and more particularly, to an energy-saving process system for purifying and recycling oxygen from high-temperature oxygen-enriched flue gas and a process thereof.

### BACKGROUND

A lithium-ion battery is widely used in production and life due to a high voltage, a high energy density, a low self-discharge efficiency, a long circulation life, no memory effect, environmental protection, and other advantages. At present, a ternary cathode material (nickel-cobalt-lithium manganate) for a lithium battery is a novel cathode material, which is prepared from raw materials including nickel salt, cobalt salt, and manganese salt. Compared with other cathode materials, the ternary material is most advantageous in a comprehensive performance, so that the ternary material has become a mainstream in cathode materials. A production process of the ternary cathode material includes mixing a nickel compound, a cobalt compound, and a manganese compound to prepare a ternary precursor at a high temperature, then mixing the precursor with a lithium compound (lithium hydroxide or lithium carbonate) evenly, and placing the mixture into an oxygen atmosphere for sintering synthesis. Since a synthesis reaction may generate carbon dioxide and water vapor during sintering, generated high-temperature oxygen-enriched flue gas contains the carbon dioxide, the water vapor, and other ingredients. In addition, a roller kiln synthesized by sintering has a slight negative pressure during production, there are many mechanical gaps in a kiln body, and air may be sucked in the oxygen-enriched flue gas during suction of a Roots blower, resulting in a nitrogen ingredient in the oxygen-enriched flue gas.

At present, most of the residual oxygen-enriched flue gas generated during sintering of the ternary cathode material for the lithium battery is directly exhausted to the atmosphere as waste gas after environmental protection treatment and dedusting, without considering purification and recycling of high-concentration oxygen in the oxygen-enriched flue gas, resulting in large oxygen consumption and high energy consumption during production, which increases a production cost of mixed sintering, thus increasing a production cost of the cathode material for the lithium battery. Only a few enterprises have made oxygen-enriched flue gas recycling devices. Although the production cost of the cathode material for the lithium battery is reduced, a small amount of air is sucked in before recycling the high-temperature oxygen-enriched flue gas, resulting in a low oxygen recycling rate and a high recycling cost of a denitrification device. For example, in the prior art, the document "CN108786371A" discloses "a system for recycling oxygen from high-temperature oxygen-enriched flue gas and a recycling method thereof, which can purify and reuse the oxygen in the high-temperature oxygen-enriched flue gas. However, nitrogen in the oxygen-enriched flue gas is not treated, and only high-temperature oxygen-enriched flue gas without the nitrogen can be treated, thus depending on the denitrification device, and having a high recycling cost and a low oxygen recycling rate, so that efficient oxygen recycling cannot be implemented.

### SUMMARY

In order to overcome the problems existing in the prior art, the present disclosure provides an energy-saving process system for purifying and recycling oxygen from high-temperature oxygen-enriched flue gas with a low recycling cost and a high oxygen recycling rate.

In order to achieve the above objective, the technical solutions used in the present disclosure are as follows.

An energy-saving system for purifying and recycling oxygen from high-temperature oxygen-enriched flue gas includes a water washing mechanism for introducing the high-temperature oxygen-enriched flue gas, a compressor set connected with the water washing system through a pipeline, a compressor outlet heat exchanger connected with the compressor set through a pipeline, a gas-liquid separation tank connected with the compressor outlet heat exchanger through a pipeline, a temperature swing adsorption isobaric drying mechanism and a pressure swing adsorption purification mechanism connected with the gas-liquid separation tank through pipelines, a dedusting and filtering mechanism for introducing gas treated by the temperature swing adsorption isobaric drying mechanism and the pressure swing adsorption purification mechanism, and a cooling mechanism for cooling the water washing mechanism and the compressor outlet heat exchanger, wherein an output end of the temperature swing adsorption isobaric drying mechanism is connected with an output end of the pressure swing adsorption purification mechanism through a pipeline, and is connected with the dedusting and filtering mechanism through a pipeline, and the pressure swing adsorption purification mechanism is connected with the water washing mechanism.

Further, the water washing mechanism includes a flue gas inlet pipe for introducing the high-temperature oxygen-enriched flue gas and a normal-temperature water pipe for filling normal-temperature water, a first water scrubber respectively connected with the flue gas inlet pipe and the normal-temperature water pipe, a drainage pipe and a second water scrubber connected with the first water scrubber, and a gas outlet pipe respectively connected with the second water scrubber and the compressor set, wherein the cooling mechanism is connected with the second water scrubber through a pipeline, and the pressure swing adsorption purification mechanism is connected with the first water scrubber.

Specifically, the temperature swing adsorption isobaric drying mechanism includes a dry gas inlet pipe connected with the gas-liquid separation tank, a first gas transmission pipe, a second gas transmission pipe, and a third gas transmission pipe connected with the dry gas inlet pipe, a fourth gas transmission pipe connected with the third gas transmission pipe, a first adsorption tower and a second adsorption tower respectively connected with the first gas transmission pipe and the second gas transmission pipe, a first output pipe and a second output pipe respectively connected with bottoms of the first adsorption tower and the second adsorption tower, a dry product gas pipe respectively connected with the first output pipe and the second output pipe and used for outputting product gas, a pre-drying tower connected with the third gas transmission pipe, a heater connected with the pre-drying tower, a fifth gas transmission pipe with one end connected with the heater and the other end respectively connected with the first output pipe and the second output pipe through pipelines, a condenser connected with the fourth gas transmission pipe, a gas-liquid separator connected with the condenser through a pipeline, a sixth gas transmission pipe connected between the third gas transmission pipe and the fourth gas transmission pipe, a seventh gas transmission pipe with one end connected with the sixth gas transmission pipe and the other end respectively connected with the first output pipe and the second output pipe through pipelines, a plurality on-off valves respectively installed on the first gas transmission pipe, the second gas transmission pipe, the third gas transmission pipe, the fourth gas transmission pipe, the first output pipe, the second output pipe, a connecting pipeline between the fifth gas transmission pipe and the first output pipe, a connecting pipeline between the fifth gas transmission pipe and the second output pipe, a connecting pipeline between the seventh gas transmission pipe and the first output pipe, and a connecting pipeline between the seventh gas transmission pipe and the second output pipe, and two second on-off valves installed on the sixth gas transmission pipe, wherein the gas-liquid separator is connected with the dry gas inlet pipe through a pipeline, the seventh gas transmission pipe is connected onto the sixth gas transmission pipe and located between the two second on-off valves, and the dry product gas pipe is connected with the output end of the pressure swing adsorption purification mechanism through a pipeline.

Specifically, the pressure swing adsorption purification mechanism includes a pressure swing adsorption gas inlet pipe connected with the gas-liquid separation tank, a plurality of pressure swing adsorption towers with bottoms connected with the pressure swing adsorption gas inlet pipe through pipelines, pressure swing adsorption gas output pipes connected with tops of the pressure swing adsorption towers, a pressure swing adsorption product gas pipe connected with each pressure swing adsorption gas output pipe and the dry product gas pipe, a pressure equalizing mechanism connected with each pressure swing adsorption gas output pipe, a first regulating valve with two ends respectively connected with the pressure swing adsorption product gas pipe and the pressure equalizing mechanism, a pressure swing adsorption exhaust pipe connected with the bottom of each pressure swing adsorption tower through a pipeline, a pressure swing adsorption recycling pipe with one end connected with the bottom of each pressure swing adsorption tower through a pipeline and the other end connected with the first water scrubber, third on-off valves respectively arranged on the pressure swing adsorption gas outlet pipe, a connecting pipeline between the pressure swing adsorption gas inlet pipe and the bottom of the pressure swing adsorption tower, a connecting pipeline between the pressure swing adsorption exhaust pipe and the bottom of the pressure swing adsorption tower, and a connecting pipeline between the pressure swing adsorption recycling pipe and the bottom of the pressure swing adsorption tower, a pressure regulating valve and a dedusting and filtering system installed on the pressure swing adsorption product gas pipe, a recycling regulating valve installed on the pressure swing adsorption recycling pipe, and a vacuum pump installed on the pressure swing adsorption exhaust pipe, wherein the pressure swing adsorption product gas pipe is connected with the dedusting and filtering mechanism.

Specifically, the pressure equalizing mechanism includes a plurality of pressure equalizing pipes respectively connected with each pressure swing adsorption gas output pipe through a pipeline, and a pressure equalizing and switching valve installed on a connecting pipeline between the pressure equalizing pipe and each pressure swing adsorption gas output pipe, wherein the first regulating valve is connected with one pressure equalizing pipe.

Specifically, at least three pressure swing adsorption towers are provided.

Specifically, the cooling mechanism is connected with a water cooling set connected with the compressor outlet heat exchanger through a pipeline and a low-temperature heat exchanger respectively connected with the water cooling set and the second water scrubber through pipelines.

The present disclosure further provides a process of the energy-saving system for purifying and recycling oxygen from high-temperature oxygen-enriched flue gas, which includes the following steps of:
S1: washing with water: washing, by the water washing mechanism, the introduced high-temperature oxygen-enriched flue gas with water to obtain low-temperature oxygen-enriched mixed gas, and inputting the low-temperature oxygen-enriched mixed gas into the compressor set;
S2: compressing and condensing: compressing and heating the low-temperature oxygen-enriched mixed gas in the compressor set, then inputting the same into the compressor outlet heat exchanger for heat exchange and cooling, and inputting the cooled gas into the gas-liquid separation tank for gas-liquid separation to obtain high-pressure and low-temperature oxygen-enriched mixed gas;
S3: temperature swing adsorption isobaric drying and pressure swing adsorption purification: employing a combined process of temperature swing adsorption isobaric drying and pressure swing adsorption purification in the step, equally dividing the high-pressure and low-temperature oxygen-enriched mixed gas into two streams, wherein one stream is inputted into the temperature swing adsorption isobaric drying mechanism for drying to remove excess water, so as to obtain low-dew-point oxygen-enriched flue gas; and the other stream is inputted into the pressure swing adsorption purification mechanism to remove excess water, carbon dioxide and nitrogen, so as to obtain low-dew-point high-purity oxygen, mixing the low-dew-point oxygen-enriched flue gas with the low-dew-point high-purity oxygen, and then inputting mixed gas into the dedusting and filtering mechanism; and
S4: dedusting and filtering the mixed gas of the low-dew-point oxygen-enriched flue gas and the low-dew-point high-purity oxygen through the dedusting and filtering mechanism, and outputting the mixed gas as product gas.

Further, the temperature swing adsorption isobaric drying in step S3 includes the following steps of:
A1: hot blowing: passing a part of high-pressure and low-temperature oxygen-enriched mixed gas through the pre-drying tower and the heater sequentially from the dry gas inlet pipe for processing to heat the gas to 150°C to 170°C, inputting the gas into the second adsorption tower for hot blowing, passing the gas through the condenser and the gas-liquid separator sequentially for cooling and liquid water separation after hot blowing, finally inputting the gas into the dry gas inlet pipe, transmitting the gas to the first adsorption tower for adsorption, and outputting the gas from the dry product gas header pipe after adsorption by the first adsorption tower;
A2: cold blowing: passing a part of high-pressure and low-temperature oxygen-enriched mixed gas through the second adsorption tower sequentially from the dry gas inlet pipe for cold blowing, transmitting the gas to the heater and heating the same to 150°C to 170°C, then inputting the gas into the pre-drying tower for heating and regeneration, passing the gas through the condenser and the gas-liquid separator sequentially for cooling and liquid water separation after treating, finally inputting the gas into the dry gas inlet pipe, transmitting the gas to the first adsorption tower for adsorption, and outputting the gas from the dry product gas header pipe after adsorption by the first adsorption tower;
A3: exchanging operation of the first adsorption tower and the second adsorption tower, so that the first adsorption tower carries out hot blowing and cold blowing sequentially, and the second adsorption tower carries out adsorption, and outputting other gas after adsorption from the dry gas header pipe (20); and
A4: repeating steps A1 to A3 to realize continuous drying of the high-pressure and low-temperature oxygen-enriched mixed gas.

Further, the pressure swing adsorption purification in step S3 includes the following steps of:
B1: adsorption: inputting the high-pressure and low-temperature oxygen-enriched mixed gas into the pressure swing adsorption tower from bottom to top from the pressure swing adsorption gas inlet pipe, after adsorption by the pressure swing adsorption tower, inputting the product gas into the pressure swing adsorption product gas pipe from the top of the pressure swing adsorption tower through the pressure swing adsorption gas output pipe, and finally inputting the gas into the dedusting and filtrating mechanism;
B2: pressure equalization and pressure reduction: inputting the high-pressure gas in the pressure swing adsorption tower after adsorption into another pressure swing adsorption tower through the pressure equalizing mechanism to balance gas pressures of the two towers;
B3. reverse exhaustion: in a reverse adsorption direction, inputting the gas in the pressure swing adsorption tower after pressure equalization and pressure reduction into the first water scrubber for recycling through the pressure swing adsorption recycling pipe, and reducing a gas pressure in the pressure swing adsorption tower to a normal pressure;
B4. vacuumizing: in a reverse adsorption direction, pumping the gas in the pressure swing adsorption tower after reverse exhaustion out through the vacuum pump, and exhausting the gas from the pressure swing adsorption exhaust pipe;
B5: pressure equalization and pressure increase: after vacuumizing, receiving, by the pressure swing adsorption tower, the high-pressure gas outputted from the pressure swing adsorption tower in step B2 through the pressure equalizing mechanism to balance gas pressures of the two towers;
B6: final increase: passing the product gas through the pressure swing adsorption product gas pipe, the first regulating valve, the pressure equalizing mechanism, and the pressure swing adsorption gas output pipe sequentially to input the product gas into the pressure swing adsorption tower after pressure equalization and pressure increase, so that a gas pressure in the pressure swing adsorption tower (31) is evenly increased to an adsorption pressure; and
B7: repeating steps B1 to B6 to realize continuous removal of water, carbon dioxide, and nitrogen from the high-pressure and low-temperature oxygen-enriched mixed gas in the pressure swing adsorption purification mechanism.

Compared with the prior art, the present disclosure has the following beneficial effects.
(1) According to the present disclosure, a recycling cost of oxygen is low, 50% of oxygen-enriched flue gas enters the temperature swing adsorption isobaric drying mechanism, the remaining 50% of oxygen-enriched flue gas enters the pressure swing adsorption purification mechanism, the product gases treated by the two systems are mixed and then transmitted to the dedusting and filtrating system, so that 50% of oxygen-enriched flue gas is treated by pressure swing adsorption denitrification through the pressure swing adsorption purification mechanism, and nitrogen and water in raw gas (oxygen-enriched flue gas) may be removed, without depending on an external denitrification device (with a low recycling rate of oxygen). Therefore, if all oxygen-enriched flue gas is treated by the pressure swing adsorption denitrification, an overall recycling rate of oxygen of the system can be reduced, while if 50% of oxygen-enriched flue gas is treated by the pressure swing adsorption denitrification, the other 50% of oxygen-enriched flue gas is treated by the temperature swing adsorption isobaric drying, and the treated gases are mixed, then an oxygen purity may meet a demand (higher than 98.5%), and the recycling rate of oxygen can be effectively increased (by about 8%).
(2) According to the present disclosure, the recycling rate of oxygen can also be improved (by about 8%) by treating 50% of oxygen-enriched flue gas by the pressure swing adsorption denitrification through the pressure swing adsorption purification mechanism, which is because oxygen with a purity higher than 99.2% can be obtained by carrying out the pressure swing adsorption purification on 50% of oxygen-enriched flue gas, and meanwhile, the other 50% oxygen-enriched flue gas is treated by the temperature swing adsorption isobaric drying. Since temperature swing adsorption mainly aims to remove water from the oxygen-enriched flue gas, isobaric drying is used in a process flow, a small part of oxygen-enriched flue gas is used in gas regeneration, after regeneration, high-temperature oxygen-enriched flue gas returns to a temperature swing adsorption inlet after cooling and liquid water separation, and is dried after being combined with most of the oxygen-enriched flue gas, without air release in a whole process, the gas regeneration only refers to converting gaseous water in the oxygen-enriched flue gas into liquid water by desorbing water after heating and liquefying water after cooling, so that a yield is greater than 99.9%, and a yield of oxygen is high by the treatment. Finally, the product gases treated by the temperature swing adsorption isobaric drying and the pressure swing adsorption purification are mixed, so that oxygen with a purity higher than 98.5% can be obtained, and meanwhile, the temperature swing adsorption drying or the pressure swing adsorption purification may be freely selected according to ingredients of the oxygen-enriched flue gas, which increases a flexibility of a device, improves the recycling rate of oxygen, and obviously improves economic benefits of an enterprise.
(3) According to the present disclosure, the recycling cost is low, the temperature swing adsorption drying is advanced in technology and simple in operation, and has the characteristics of less construction investment, small occupied area, and high yield compared with the pressure swing adsorption purification, the oxygen-enriched flue gas is equally divided into two streams, one stream is subjected to the temperature swing adsorption drying, the other stream is subjected to the pressure swing adsorption purification, and high-purity oxygen can be obtained by mixing the two product gases, thus making up for the problems of a high cost and a low recycling rate of the pressure swing adsorption purification, and effectively reducing the recycling cost.
(3) According to the present disclosure, during the temperature swing adsorption drying, moisture in the oxygen-enriched flue gas is further separated by coordinated use of the first adsorption tower, the second adsorption tower, and the pre-drying tower depending on the condenser and the gas-liquid separator. Hot blowing, cold blowing and adsorption are carried out on an adsorbent bed layer, a principle thereof is that moisture is adsorbed by an adsorbent in the first adsorption tower or the second adsorption tower at a low temperature, and the moisture adsorbed by the adsorbent is desorbed at a high temperature. Therefore, when the adsorbent is saturated in adsorption, the adsorbent bed layer is heated by hot blowing first to desorb the moisture adsorbed by the adsorbent, and then the adsorbent is completely regenerated. After hot blowing, since the adsorbent bed layer has a high temperature, an adsorption performance of the adsorbent is poor. Therefore, the temperature of the adsorbent bed layer is reduced to a normal temperature by cold blowing, then the adsorbent is converted into an adsorption state, without oxygen loss in a whole process, and regenerated water vapor is cooled and then converted into condensed water to be separated from the gas.
(4) According to the present disclosure, during the pressure swing adsorption purification, oxygen with a purity higher than 99.2% is obtained through matching of the pressure equalizing pipe and the pressure swing adsorption tower, during the reverse exhaustion, adsorbed impurities are desorbed from the adsorbent, and the reversely exhausted and desorbed gas contains a part of oxygen and returns to the first water scrubber for retreatment, thus increasing the recycling rate of oxygen of the system, improving a utilization efficiency of the adsorbent at the same time, and reducing a cost of the system.
(5) According to the present disclosure, the dedusting and filtering mechanism is used, which filters the mixed product gas treated by the temperature swing adsorption isobaric drying and the pressure swing adsorption purification, and meanwhile, the finally obtained product gas is dedusted by the dedusting and filtering system to obtain final product gas of product oxygen with a dust content less than or equal to 1 µm, thus effectively improving a quality of the product oxygen and broadening a product use.
(6) According to the present disclosure, dust particles in the mixed gas are removed through the water washing mechanism, wherein washing with normal-temperature water and cooling are mainly carried out through the first water scrubber, and the dust particles in the mixed gas are removed, so as to avoid corrosion and wear to equipment and pipelines caused by deposition of low-temperature water particles in a rear section; washing with low-temperature water and cooling are carried out through the second water scrubber to reduce a content of water vapor in the oxygen-enriched flue gas, and a volume flow of the oxygen-enriched flue gas is reduced, which reduces energy consumption of compression work in the rear section; no condensed water is precipitated during compression, which reduces wear of the oxygen compressor during compression; and low-temperature condensation is carried out after compression, which can reduce a water removal load of temperature swing adsorption and pressure swing adsorption in the rear section, thus reducing total energy consumption of the system.

### BRIEF DESCRIPTION OF THE DRAWINGS

FIG. 1 is a flow chart of a system of the present disclosure.
FIG. 2 is a connecting structure diagram of a temperature swing adsorption isobaric drying mechanism of the present disclosure.
FIG. 3 is a connecting structure diagram of a pressure swing adsorption purification mechanism of the present disclosure.

Corresponding names of the numerals are as follows:
1 refers to compressor set, 2 refers to compressor outlet heat exchanger, 3 refers to gas-liquid separation tank, 4 refers to dedusting and filtering mechanism, 5 refers to flue gas inlet pipe, 6 refers to normal-temperature water pipe, 7 refers to first water scrubber, 8 refers to drainage pipe, 9 refers to second water scrubber, 10 refers to gas outlet pipe, 11 refers to dry gas inlet pipe, 12 refers to first gas transmission pipe, 13 refers to second gas transmission pipe, 14 refers to third gas transmission pipe, 15 refers to fourth gas transmission pipe, 16 refers to first adsorption tower, 17 refers to second adsorption tower, 18 refers to first output pipe, 19 refers to second output pipe, 20 refers to dry product gas pipe, 21 refers to pre-drying tower, 22 refers to heater, 23 refers to fifth gas transmission pipe, 24 refers to condenser, 25 refers to gas-liquid separator, 26 refers to sixth gas transmission pipe, 27 refers to seventh gas transmission pipe, 28 refers to first on-off valve, 29 refers to second on-off valve, 30 refers to pressure swing adsorption gas inlet pipe, 31 refers to pressure swing adsorption tower, 32 refers to pressure swing adsorption gas output pipe, 33 refers to pressure swing adsorption product gas pipe, 34 refers to first regulating valve, 35 refers to pressure swing adsorption exhaust pipe, 36 refers to pressure swing adsorption recycling pipe, 37 refers to third on-off valve, 38 refers to pressure regulating valve, 39 refers to recycling regulating valve, 40 refers to vacuum pump, 41 refers to pressure equalizing pipe, 42 refers to pressure equalizing and switching valve, 43 refers to water cooling set, 44 refers to low-temperature heat exchanger, 45 refers to a temperature swing adsorption isobaric drying mechanism, 46 refers to pressure swing adsorption purification mechanism, and 47 refers to dedusting and filtering system.

### DETAILED DESCRIPTION

The present disclosure is further described hereinafter with reference to the accompanying drawings and the embodiments, and the manners of the present disclosure include but are not limited to the following embodiments

### Embodiment 1

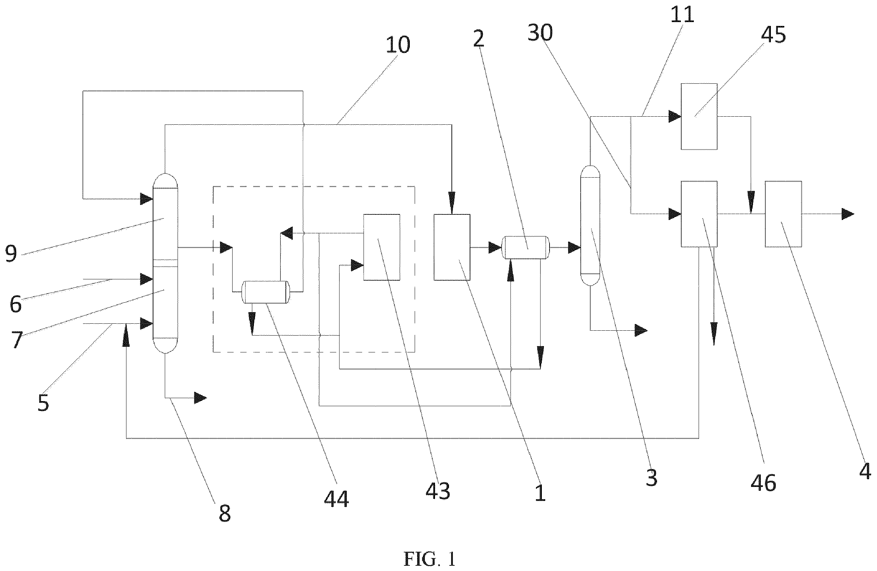

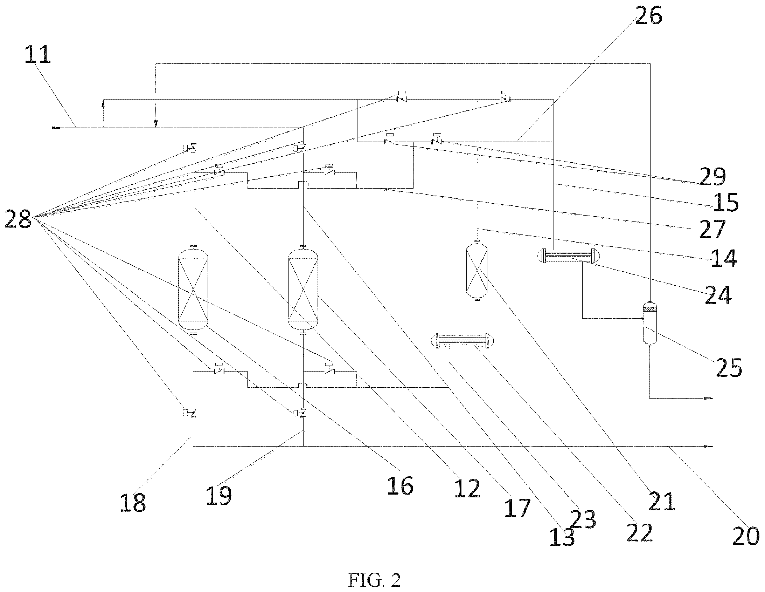

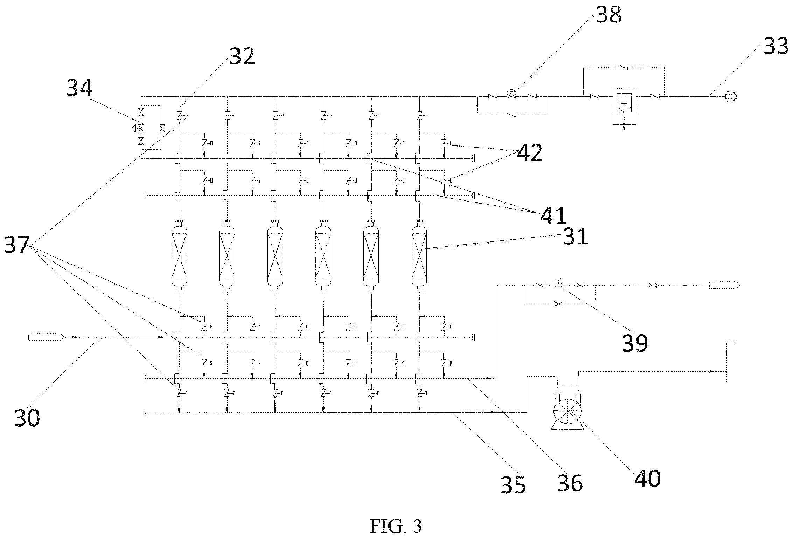

As shown in FIG. 1 to FIG. 3, an energy-saving system for purifying and recycling oxygen from high-temperature oxygen-enriched flue gas includes a water washing mechanism, a compressor set 1, a compressor outlet heat exchanger 2, a gas-liquid separation tank 3, a temperature swing adsorption isobaric drying mechanism 45, a pressure swing adsorption purification mechanism 46, a dedusting and filtering mechanism 4, a cooling mechanism, and the like.

The water washing mechanism is used for removing dust particles in mixed gas, and includes a flue gas inlet pipe 5, a normal-temperature water pipe 6, a first water scrubber 7, a drainage pipe 8, a second water scrubber 9, and a gas outlet pipe 10. The flue gas inlet pipe 5 is used for introducing external high-temperature oxygen-enriched flue gas, and is connected with a gas inlet of the first water scrubber 7. The normal-temperature water pipe 6 is connected with a water inlet at an upper part of the first water scrubber 7, and is used for filling normal-temperature water into the first water scrubber 7, so that enough normal-temperature water exists in the first water scrubber 7 to reduce a temperature of the high-temperature oxygen-enriched flue gas. The first water washing tower 7 is filled with structured packing, which is used for removing the dust particles in the mixed gas, so as to avoid corrosion and wear to equipment and pipelines caused by deposition of low-temperature water particles in a rear section, the temperature of the high-temperature oxygen-enriched flue gas is reduced through the normal-temperature water, and the gas inlet thereof is connected with a pressure swing adsorption recycling pipe 36, and is used for retreating flue gas recycled by pressure swing adsorption purification. The drainage pipe 8 is connected with a water outlet at a bottom, and is used for self-flowing and water returning, and exhausting the used normal-temperature water. A gas inlet of the second water scrubber 9 is connected with a gas outlet of the first water scrubber 7, and is used for reducing a content of water vapor in low-temperature oxygen-enriched flue gas treated by the first water scrubber 7, and a volume flow of the oxygen-enriched flue gas is reduced, which can reduce energy consumption of compression work in the rear section. A water inlet and a water outlet of the second water scrubber are respectively connected with a hot-side water outlet and a hot-side water inlet of a low-temperature heat exchanger 44 through pipelines, and are used for introducing and outputting heat exchange water in the low-temperature heat exchanger 44, and oxygen-enriched flue gas treated by secondary washing with water is inputted into the gas outlet pipe 10. One end of the gas outlet pipe 10 is connected with a gas outlet of the second water scrubber 9, the other end of the gas outlet pipe is connected with a gas inlet of the compressor set 1, and the gas outlet pipe is used for outputting the oxygen-enriched flue gas to the compressor set 1 for treatment.

The compressor set 1 is used for compressing the oxygen-enriched flue gas and then transmitting the oxygen-enriched flue gas to the compressor outlet heat exchanger 2.

The compressor outlet heat exchanger 2 is used for exchanging heat with the oxygen-enriched flue gas, the hot-side gas outlet thereof is connected with an inlet of the gas-liquid separation tank 3 through a pipeline, and a water outlet and a water inlet of the compressor outlet heat exchanger are respectively connected with a water inlet and a water outlet of a water cooling set 43 through pipelines.

The oxygen-enriched flue gas subjected to heat exchange is introduced into the gas-liquid separation tank 3 to separate water in the oxygen-enriched flue gas, thus improving a purity of the oxygen-enriched flue gas. An exhaust port of the gas-liquid separation tank is connected with a dry gas inlet pipe 11 and a pressure swing adsorption gas inlet pipe 30 through pipelines, and is used for inputting the separated oxygen-enriched flue gas into the temperature swing adsorption isobaric drying mechanism 45 and the pressure swing adsorption purification mechanism 46 for treatment.

The temperature swing adsorption isobaric drying mechanism 45 includes the dry gas inlet pipe 11, a first gas transmission pipe 12, a second gas transmission pipe 13, a third gas transmission pipe 14, a fourth gas transmission pipe 15, a first adsorption tower 16, a second adsorption tower 17, a first output pipe 18, a second output pipe 19, a dry product gas pipe 20, a pre-drying tower 21, a heater 22, a fifth gas transmission pipe 23, a condenser 24, a gas-liquid separator 25, a sixth gas transmission pipe 26, a seventh gas transmission pipe 27, a first on-off valve 28, and a second on-off valve 29. The dry gas inlet pipe 11 is connected with the exhaust port of the gas-liquid separation tank 3, and is used for introducing oxygen-enriched flue gas to be treated. One end of the first gas transmission pipe 12 is connected with the dry gas inlet pipe 11, the other end of the first gas transmission pipe is connected with the first adsorption tower 16, the first gas transmission pipe is used for transmitting the gas, and a first on-off valve 28 for controlling on-off of a pipeline is installed on the first gas transmission pipe. One end of the second gas transmission pipe 13 is connected with the dry gas inlet pipe 11, the other end of the second gas transmission pipe is connected with the second adsorption tower 17, the second gas transmission pipe is used for transmitting the gas, and a first on-off valve 28 for controlling on-off of a pipeline is installed on the second gas transmission pipe. One end of the third gas transmission pipe 14 is connected with the dry gas inlet pipe 11, the other end of the third gas transmission pipe is connected with the pre-drying tower 21, the third gas transmission pipe is used for transmitting the gas, and a first on-off valve 28 for controlling on-off of a pipeline is installed on the third gas transmission pipe 14. The fourth gas transmission pipe 15 is connected onto the third gas transmission pipe 14 and is connected with the condenser 24, and a first on-off valve 28 for controlling on-off of a pipeline is installed on the fourth gas transmission pipe. The first adsorption tower 16 and the second adsorption tower 17 are both used for adsorbing the gas. The first output pipe 18 is connected with a bottom of the first adsorption tower 16, and is used for outputting the gas after adsorption to the dry product gas header pipe 20, and a first on-off valve 28 for controlling on-off of a pipeline is installed on the first output pipe. The second output pipe 19 is connected with a bottom of the second adsorption tower 17, and is used for outputting the gas after adsorption to the dry product gas header pipe 20, and a first on-off valve 28 for controlling on-off of a pipeline is installed on the second output pipe. The dry product gas pipe 20 is connected with the pressure swing adsorption gas output pipe 32, so that gas subjected to temperature swing adsorption isobaric drying and gas subjected to pressure swing adsorption purification are mixed and then inputted into the dedusting and filtering mechanism 4 for dedusting and filtering. The pre-drying tower 21 is used for drying the gas again to remove moisture in the gas, and is connected with the heater 22 through a pipeline. The heater 22 is used for heating the gas to 150°C to 170°C, and two ends of the heater are respectively connected with the fifth gas transmission pipe 23 and the pre-drying tower 21 for outputting the gas. The fifth gas transmission pipe 23 is respectively connected with the first output pipe 18 and the second output pipe 19 through pipelines, and is used for transmitting the gas, a first on-off valve 28 for controlling on-off of a pipeline is installed on a connecting pipeline between the fifth gas transmission pipe and the first output pipe 18, and a first on-off valve 28 for controlling on-off of a pipeline is installed on a connecting pipeline between the fifth gas transmission pipe and the second output pipe 19. One end of the condenser 24 is connected with the fourth gas transmission pipe 15, the other end of the condenser is connected with the gas-liquid separator 25, and the condenser is used for condensing the gas, and transmitting the gas to the gas-liquid separator 25 to separate moisture again, so as to ensure the purity of the gas. The gas-liquid separator 25 is used for separating the moisture from the gas, and transmitting the separated gas back to the dry gas inlet pipe 11 for retreatment, and separated condensed water is exhausted from the system. The sixth gas transmission pipe 26 is connected between the third gas transmission pipe 14 and the fourth gas transmission pipe 15. One end of the seventh gas transmission pipe 27 is connected with the sixth gas transmission pipe 26, the other end of the seventh gas transmission pipe is connected with the first gas transmission pipe 12 and the second gas transmission pipe 13 through pipelines, a first on-off valve 28 for controlling on-off of a pipeline is installed on a connecting pipeline between the seventh gas transmission pipe and the first gas transmission pipe 12, and a first on-off valve 28 for controlling on-off of a pipeline is installed on a connecting pipeline between the seventh gas transmission pipe and the second gas transmission pipe 13. The first on-off valve 28 is used for controlling on-off of a pipeline, and multiple first on-off valves 28 are provided. Two second on-off valves 29 are provided, and are installed on both sides of the seventh gas transmission pipe 27.

The pressure swing adsorption purification mechanism 46 includes a pressure swing adsorption gas inlet pipe 30, a pressure swing adsorption tower 31, a pressure swing adsorption gas output pipe 32, a pressure swing adsorption product gas pipe 33, a pressure equalizing mechanism, a pressure swing adsorption exhaust pipe 35, a pressure swing adsorption recycling pipe 36, a third on-off valve 37, a pressure regulating valve 38, a dedusting and filtering system 47, a recycling regulating valve 39, and a vacuum pump 40. The pressure swing adsorption gas inlet pipe 30 is connected with the exhaust port of the gas-liquid separation tank 3, and is connected with a bottom of each pressure swing adsorption tower 31 through a pipeline, and a third on-off valve 37 is installed on a connecting pipeline between the pressure swing adsorption gas inlet pipe and each pressure swing adsorption tower 31. Multiple and at least three pressure swing adsorption towers 31 are provided, one end of the pressure swing adsorption tower is connected with the pressure swing adsorption gas inlet pipe 30 through a pipeline, and the other end of the pressure swing adsorption tower is connected with the pressure swing adsorption gas outlet pipe 32 through a pipeline. The pressure swing adsorption gas output pipe 32 is used for outputting the gas after adsorption to the pressure swing adsorption product gas pipe 33. The pressure swing adsorption product gas pipe 33 is connected with the dedusting and filtering mechanism 4. The pressure equalizing mechanism is used for equalizing pressures of the pressure swing adsorption towers 31, and includes at least two pressure equalizing pipes 41 which are not connected with each other, each pressure equalizing pipe 41 is connected with each pressure swing adsorption tower 31 through a pipeline, and a pressure equalizing and switching valve 42 is installed on a connecting pipeline between the pressure equalizing pipe 41 and each pressure swing adsorption tower 31. The pressure swing adsorption exhaust pipe 35 is connected with each pressure swing adsorption tower 31 through a pipeline, a third on-off valve 37 for controlling on-off of a pipeline is installed on a connecting pipeline between the pressure swing adsorption exhaust pipe and each pressure swing adsorption tower 31, and the vacuum pump 35 is installed on the pressure swing adsorption exhaust pipe for outputting exhaust gas. The pressure swing adsorption recycling pipe 36 is connected with each pressure swing adsorption tower 31 through a pipeline, a third on-off valve 37 for controlling on-off of a pipeline is installed on a connecting pipeline between the pressure swing adsorption recycling pipe and each pressure swing adsorption tower 31, a recycling regulating valve 39 is installed on the pressure swing adsorption recycling pipe for controlling on-off of the pressure swing adsorption recycling pipe 36, and the other end of the pressure swing adsorption recycling pipe is connected with the gas inlet of the first water scrubber 7. The pressure regulating valve 38 is installed on the pressure swing adsorption product gas pipe 33, and is used for stabilizing a gas pressure. The dedusting and filtering system 47 is installed on the pressure swing adsorption product gas pipe 33, and is used for filtering the product gas, thus further ensuring a purity of output gas.

The dedusting and filtering mechanism 4 is connected with the pressure swing adsorption product gas pipe 33, and is used for making product oxygen enter the dedusting and filtering system 47, so that a dust content of the product oxygen is less than or equal to 1 µm, and finally, the product oxygen is outputted through a pipeline for recycling.

### Embodiment 2

As shown in FIG. 1 to FIG. 3, a process of the energy-saving system for purifying and recycling oxygen from high-temperature oxygen-enriched flue gas includes the following steps.

In S1: washing with water: high-temperature oxygen-enriched flue gas (80°C, oxygen concentration of 95% to 96%, water content of 1% to 2%, carbon dioxide content of 100 ppm, and nitrogen+argon content of 2%) with a gas flow rate of 16,000 Nm³/h and normal-temperature water at 32°C and 30 m³/h respectively enter a first water scrubber 7 through a flue gas inlet pipe 5 and a normal-temperature water pipe 6. Under an action of structured packing, the normal-temperature water is used as wash water to wash the high-temperature oxygen-enriched flue gas so as to remove particle impurities in the high-temperature oxygen-enriched flue gas. Meanwhile, the high-temperature oxygen-enriched flue gas contacts with the wash water for heat exchange to obtain the oxygen-enriched mixed gas at 35°C, and the wash water after heat exchange flows back from a drainage pipe 8. The oxygen-enriched mixed gas enters a second water scrubber 9 through a gas path, and under the action of the structured packing, the oxygen-enriched mixed gas contacts with low-temperature water at 7°C and 33 m³/h, which comes from a low-temperature heat exchanger 44 and serves as low-temperature wash water, for heat exchange to obtain the oxygen-enriched mixed gas at a temperature lower than 12°C, and the oxygen-enriched mixed gas at the temperature lower than 12°C is outputted from a top of the second water scrubber 9 through a gas outlet pipe 10.

The wash water of the first water scrubber 7 is subjected to a first closed-cycle circulation, and the first closed-cycle circulation is specifically as follows: the normal-temperature water at 32°C outside a battery limit enters the first water scrubber 7 through the normal-temperature water pipe 6, in the first water scrubber 7, the wash water contacts, at a normal temperature, with the oxygen-enriched flue gas at 80°C for washing and heat exchange, and the wash water subjected to washing and heat exchange flows back through the drainage pipe 8.

The wash water at 7°C of the second water scrubber 9 is subjected to a second closed-cycle circulation, and the second closed-cycle circulation is specifically as follows: backwater of the wash water of the second water scrubber 9 enters a hot side of the low-temperature heat exchanger 44 through a pipeline, low-temperature water obtained through heat exchange returns to the second water scrubber 9 through a pipeline, in the second water scrubber 9, the wash water at 7°C contacts, at a low temperature, with the oxygen-enriched mixed gas exhausted from the first water scrubber 7 for heat exchange under the action of the structured packing, and the wash water subjected to low-temperature heat exchange is transmitted to the hot side of the low-temperature heat exchanger 44 through a pipeline.

In the step, a first cold-side closed-cycle circulation is carried out on a cold side of a low-temperature heat exchanger G2, and the first cold-side closed-cycle circulation is specifically as follows: low-temperature water prepared by a water cooling set 43 enters the cold side of the low-temperature heat exchanger 44 through a pipeline, and medium-temperature water obtained through heat exchange returns to an inlet of the water cooling set 43 through a pipeline.

In S2: compressing and condensing: the oxygen-enriched mixed gas at a temperature lower than 12°C obtained after washing with water and cooling enters the compressor set 1 through the gas outlet pipe 10 to be compressed so as to obtain oxygen-enriched mixed gas at 0.4 MPa.G The oxygen-enriched mixed gas at 0.4 MPa.G enters a hot side of a compressor outlet heat exchanger 2 through a pipeline to carry out wall-to-wall heat exchange with low-temperature water at 5°C of a cold side thereof to obtain oxygen-enriched mixed gas at a temperature lower than 15°C and condensed water. The oxygen-enriched mixed gas at 0.4 MPa.G and 15°C and the condensed water enter a gas-liquid separation tank 3 for gas-liquid separation through pipelines, the condensed water is exhausted from a water outlet at a bottom of the gas-liquid separation tank 3 for recycling through a pipeline, and the oxygen-enriched mixed gas at 0.4 MPa.G and 15°C is outputted from a top of the gas-liquid separation tank 3 to a dry gas inlet pipe 11 and a pressure swing adsorption gas inlet pipe 30 through pipelines.

A second cold-side closed-cycle circulation is carried out on water of a cold side of the compressor outlet heat exchanger 2, and the second cold-side closed-cycle circulation is specifically as follows: the low-temperature water prepared by the water cooling set 43 enters the cold side of the compressor outlet heat exchanger 2 through a pipeline, and the medium-temperature water obtained through heat exchange returns to the inlet of the water cooling set 43 through a pipeline.

In S3: temperature swing adsorption isobaric drying and pressure swing adsorption purification: a combined process of temperature swing adsorption isobaric drying and pressure swing adsorption purification is employed in the step, the high-pressure and low-temperature oxygen-enriched mixed gas is equally divided into two gas sources, wherein one gas source enters a temperature swing adsorption isobaric drying mechanism 45 to remove excess water, so as to obtain low-dew-point oxygen-enriched flue gas, and the low-dew-point oxygen-enriched flue gas is outputted through a dry product gas header pipe 20. The other gas source enters a pressure swing adsorption purification mechanism 46 to remove excess water, carbon dioxide, and nitrogen, so as to obtain low-dew-point high-purity oxygen, and the low-dew-point high-purity oxygen is outputted through a pressure swing adsorption product gas pipe 33. The low-dew-point oxygen-enriched flue gas outputted through the dry product gas header pipe 20 is inputted into the pressure swing adsorption product gas pipe 33, and mixed with the low-dew-point high-purity oxygen outputted through the pressure swing adsorption product gas pipe 33, so that a purity of final product oxygen is higher than 98.5%, and then mixed gas is inputted into a dedusting and filtering mechanism 4.

In S4: dedusting and filtering: the product oxygen with the purity higher than 98.5% enters the dedusting and filtering system 4, so that a dust content of the product oxygen is less than or equal to 1 µm, and finally, the product oxygen is outputted through a pipeline P9 for recycling.

A circulation sequence of the temperature swing adsorption isobaric drying mechanism 45 is shown in Table 1, and specific working steps are as follows.

In step A1, adsorption is carried out through a first adsorption tower 16, and hot blowing is carried out through a second adsorption tower 17. A part of oxygen-enriched mixed gas is transmitted to the first adsorption tower 16 from the dry gas inlet pipe 11 through a first on-off valve 28, moisture in the oxygen-enriched mixed gas is adsorbed, dehydrated and dried in the first adsorption tower 16, and dried gas passes through a first output pipe 18 and the dry product gas header pipe 20 in sequence to be outputted to the pressure swing adsorption product gas pipe 33 for mixing. The other part of oxygen-enriched mixed gas is transmitted to a pre-drying tower 21 through a third gas transmission pipe 14 for pre-drying, and then heated to 150°C to 170°C through a heater 22, and then enters the second adsorption tower 17 through a fifth gas transmission pipe 23. Hot blowing is continuously carried out on the second adsorption tower 17 for 4 hours, mixed gas after hot blowing passes through a seventh gas transmission pipe 27, a sixth gas transmission pipe 26, and a fourth gas transmission pipe 15 in sequence to enter a condenser 24. Moisture in the mixed gas is condensed in the condenser 24, and the moisture is exhausted from the system through a gas-liquid separator 25. The remaining mixed gas returns to the dry gas inlet pipe 11 from a top of the gas-liquid separator 25.

In step A2, adsorption is carried out through the first adsorption tower 16, and cold blowing is carried out through the second adsorption tower 17. A part of oxygen-enriched mixed gas is transmitted to the first adsorption tower 16 from the dry gas inlet pipe 11 through the first on-off valve 28, moisture in the oxygen-enriched mixed gas is adsorbed, dehydrated and dried in the first adsorption tower 16, and dried gas passes through the first output pipe 18 and the dry product gas header pipe 20 in sequence to be outputted to the pressure swing adsorption product gas pipe 33 for mixing. The other part of oxygen-enriched mixed gas passes through the third gas transmission pipe 14, the sixth gas transmission pipe 26, and the seventh gas transmission pipe 27 in sequence to be inputted into the second gas transmission pipe 13, and finally enters the second adsorption tower 17. Cold blowing is continuously carried out on the second adsorption tower 17 for 1 hour to 4 hours, mixed gas after cold blowing passes through a second output pipe 19 and the fifth gas transmission pipe 23 in sequence to enter the heater 22. The mixed gas enters the pre-drying tower 21 after being heated, then hot blowing is carried out on the pre-drying tower 21, and the mixed gas after hot blowing passes through the third gas transmission pipe 14 and the fourth gas transmission pipe 15 in sequence to enter the condenser 24. Moisture in the mixed gas is condensed in the condenser 24, and the moisture is exhausted from the system through the gas-liquid separator 25. The remaining mixed gas returns to the dry gas inlet pipe 11 from the top of the gas-liquid separator 25.

In step A3, adsorption is carried out through the second adsorption tower 17, and hot blowing is carried out through the first adsorption tower 16. A part of oxygen-enriched mixed gas is transmitted to the second adsorption tower 17 from the dry gas inlet pipe 11 through the second gas transmission pipe 13, moisture in the oxygen-enriched mixed gas is adsorbed, dehydrated and dried in the second adsorption tower 17, and dried gas passes through the second output pipe 19 and the dry product gas header pipe 20 in sequence to be outputted to the pressure swing adsorption product gas pipe 33 for mixing. The other part of oxygen-enriched mixed gas is transmitted to the pre-drying tower 21 through the third gas transmission pipe 14 for pre-drying, and then heated to 150°C to 170°C through the heater 22, and then passes through the fifth gas transmission pipe 23 and the first output pipe 18 in sequence to enter the first adsorption tower 16. Hot blowing is continuously carried out on the first adsorption tower 16 for 4 hours, mixed gas after hot blowing passes through the seventh gas transmission pipe 27, the sixth gas transmission pipe 26, and the fourth gas transmission pipe 15 in sequence to enter the condenser 24. Moisture in the mixed gas is condensed in the condenser 24, and the moisture is exhausted from the system through the gas-liquid separator 25. The remaining mixed gas returns to the dry gas inlet pipe 11 from the top of the gas-liquid separator 25.

In step A4, adsorption is carried out through the second adsorption tower 17, and cold blowing is carried out through the first adsorption tower 16. A part of oxygen-enriched mixed gas is transmitted to the second adsorption tower 17 from the dry gas inlet pipe 11 through the second gas transmission pipe 13, moisture in the oxygen-enriched mixed gas is adsorbed, dehydrated and dried in the second adsorption tower 17, and dried gas passes through the second output pipe 19 and the dry product gas header pipe 20 to be outputted to the pressure swing adsorption product gas pipe 33 for mixing. The other part of oxygen-enriched mixed gas passes through the third gas transmission pipe 14, the sixth gas transmission pipe 26, and the seventh gas transmission pipe 27 in sequence to be inputted into the first adsorption tower 16, cold blowing is continuously carried out on the first adsorption tower 16 for 1 hour to 4 hours, mixed gas after cold blowing passes through the first output pipe 18 and the fifth gas transmission pipe 23 in sequence to enter the heater 22. The mixed gas enters the pre-drying tower 21 after being heated, then hot blowing is carried out on the pre-drying tower 21, and the mixed gas after hot blowing passes through the third gas transmission pipe 14 and the fourth gas transmission pipe 15 in sequence to enter the condenser 24. Moisture in the mixed gas is condensed in the condenser 24, and the moisture is exhausted from the system through the gas-liquid separator 25. The remaining mixed gas returns to the dry gas inlet pipe 11 from the top of the gas-liquid separator 25.

In step A5, steps A1 to A3 are repeated to realize continuous drying of the high-pressure and low-temperature oxygen-enriched mixed gas, so as to obtain mixed gas with a dew point lower than -47°C and a water content lower than 50 ppm.

**Table 1**

| | Circulation sequence chart | | | |
|---|---|---|---|---|
| | First step | Second step | Third step | Fourth step |
| First adsorption tower | Gas generation by adsorption | | Hot blowing | Cold blowing |
| Second adsorption tower | Hot blowing | Cold blowing | Gas generation by adsorption | |
| Pre-drying tower | Cold blowing | Hot blowing | Cold blowing | Hot blowing |

A circulation sequence of the pressure swing adsorption purification mechanism 46 is shown in Table 2, and specific working steps are as follows.

A total of six pressure swing adsorption towers 31 (FT1, FT2, FT3, FT4, FT5, and FT6) are provided. Now, taking one pressure swing adsorption tower 31 (FT1) as an example, whole process steps of a main flow are described, and the remaining pressure swing adsorption towers 31 have the same process steps.

In step B1: adsorption: the high-pressure and low-temperature oxygen-enriched mixed gas transmitted from the pressure swing adsorption gas inlet pipe 30 enters the pressure swing adsorption tower 31 (FT1) through a pipeline, wherein water, carbon dioxide and nitrogen impurity ingredients are selectively adsorbed by various adsorbents filled in the pressure swing adsorption tower 31 in sequence, and obtained product oxygen with a carbon dioxide content lower than 50 ppm, a water content lower than 50 ppm, and an oxygen content higher than 99% is exhausted through the pressure swing adsorption gas outlet pipe 32. After pressure stabilization by a pressure regulating valve 38, most of the product oxygen is transmitted to the dedusting and filtering mechanism 4 through the pressure swing adsorption product gas pipe 33 to filter dust of an adsorbent, so as to control a dust content in the product oxygen to be less than 1 µm, and a small part of the product oxygen is used for final pressure increase of the remaining pressure swing adsorption towers 31 through the first regulating valve 34. With progress of adsorption, when a front edge of impurities (i.e., adsorption front edge) rises to a certain height close to an adsorption bed, a third on-off valve 37 on a connecting pipeline between the pressure swing adsorption tower and the pressure swing adsorption gas inlet pipe 30 and a third shutoff valve 37 installed on the pressure swing adsorption gas outlet pipe 32 are closed to stop adsorption. At the moment, a section of adsorbent unsaturated in adsorption is still left between the adsorption front edge and an outlet of the adsorption bed, which is called a reserved section.

In step B2: first pressure equalization and pressure reduction: after an adsorption process is completed, a pressure equalizing and switching valve 42 installed on a connecting pipeline between one pressure equalizing pipe 41 and the pressure swing adsorption gas output pipe 32, and a pressure equalizing and switching valve 42 on a connecting pipeline between the pressure equalizing pipe 41 and the other pressure swing adsorption gas output pipe 32 are opened, and product oxygen with a higher pressure in the pressure swing adsorption tower 31 (FT1) is put into the pressure swing adsorption tower 31 (FT4) through the pressure equalizing pipe 41 until pressures of the two pressure swing adsorption towers 31 are basically equal. This process not only is a pressure reduction process, but also recycles oxygen in a closed space of a bed layer of the pressure swing adsorption tower 31. In the process, the adsorption front edge of the pressure swing adsorption tower 31 (FT1) will continue to move forward, but the adsorption front edge has not yet reached the outlet.

In step B3: second pressure equalization and pressure reduction: after the first pressure equalization and pressure reduction process is completed, a pressure equalizing and switching valve 42 installed on a connecting pipeline between the other pressure equalizing pipe 41 and the pressure swing adsorption gas output pipe 32, and a pressure equalizing and switching valve 42 on a connecting pipeline between the pressure equalizing pipe 41 and the other pressure swing adsorption gas output pipe 32 are opened, and product oxygen with a higher pressure in the pressure swing adsorption tower 31 (FT1) is put into the pressure swing adsorption tower 31 (FT5) through the pressure equalizing pipe 41 for second pressure equalization and pressure reduction of the pressure swing adsorption towers 31. The oxygen in the closed space of the bed layer of the pressure swing adsorption tower 31 (FT1) is recycled continuously in the process, and meanwhile, the adsorption front edge of the pressure swing adsorption tower 31 (FT1) after adsorption will continue to move forward, but the adsorption front edge has not yet reached the outlet.

In step B4: reverse exhaustion: after a continuous forward pressure reduction process is completed, the adsorption front edge of the pressure swing adsorption tower 31 (FT1) has basically reached the outlet of the bed layer. At the moment, a third on-off valve 37 installed on a connecting pipeline between the pressure swing adsorption recycling pipe 36 and the pressure swing adsorption tower 31 (FT1) is opened, and a pressure of the pressure swing adsorption tower 31 (FT1) is reduced to close to a normal pressure in a reverse adsorption direction. At the moment, adsorbed impurities such as water, carbon dioxide and nitrogen begin to be desorbed from the adsorbent. Reversely exhausted and desorbed gas returns to the gas inlet of the first water scrubber 7 through the recycling regulating valve 39.

In step B5: vacuumizing: after the reverse exhaustion is completed, a third cut-off valve 37 on a connecting pipeline between the pressure swing adsorption tower 31 (FT1) and the pressure swing adsorption exhaust pipe 35 is opened, and the pressure swing adsorption tower 31 (FT1) is vacuumized. At the moment, a lot of adsorbed impurities are desorbed and vented to a high point at site in a reverse adsorption direction through the vacuum pump 40.

In step B6: second pressure equalization and pressure increase: after the vacuumizing process is completed, a pressure equalizing and switching valve 42 on a connecting pipeline between the pressure equalizing pipe 41 for the second pressure equalization and pressure reduction and the pressure swing adsorption gas output pipe 32 of the pressure swing adsorption tower 31 (FT1), and a pressure equalizing and switching valve 42 on a connecting pipeline between the pressure swing adsorption gas output pipe 32 of the pressure swing adsorption tower 31 (FT4) and the pressure equalizing pipe 41 for the second pressure equalization and pressure reduction are opened, and second pressure equalization and pressure increase are carried out on the pressure swing adsorption tower 31 (FT1) by using the oxygen with the higher pressure during the second pressure equalization and pressure reduction of the pressure swing adsorption tower 31 (FT4).

In step B7: first pressure equalization and pressure increase: after the second pressure equalization and pressure increase process is completed, a pressure equalizing and switching valve 42 on a connecting pipeline between the pressure equalizing pipe 41 for the first pressure equalization and pressure reduction and the pressure swing adsorption gas output pipe 32 of the pressure swing adsorption tower 31 (FT1), and a pressure equalizing and switching valve 42 on a connecting pipeline between the pressure swing adsorption gas output pipe 32 of the pressure swing adsorption tower 31 (FT5) and the pressure equalizing pipe 41 for the first pressure equalization and pressure reduction are opened, and then the oxygen with the higher pressure in the pressure swing adsorption tower 31 (FT5) is recycled into the pressure swing adsorption tower 31 (FT1) which has just completed the second pressure equalization and pressure increase.

In step B8: final increase: after the two pressure equalization and pressure increase processes, the pressure of the pressure swing adsorption tower 31 (FT1) still does not reach an adsorption pressure. At the moment, a pressure equalizing and switching valve 42 on a connecting pipeline between the pressure equalizing pipe 41 connected with the first regulating valve 34 and the pressure swing adsorption gas outlet pipe 32 of the pressure swing adsorption tower 31 (FT1) is opened, and the pressure of the pressure swing adsorption tower 31 (FT1) is increased slowly with the product oxygen through the first regulating valve 34 until the pressure of the pressure swing adsorption tower 31 (FT1) is increased to the adsorption pressure.

After a series of pressure reduction and pressure increase processes above, the pressure swing adsorption tower 31 (FT1) completes a whole regeneration process, making preparations for next adsorption and entering a next adsorption circulation.

Process steps of the adsorption towers FT2 to 6 are completely the same as those of the FT1. One tower is always in an adsorption state, and five towers are in different regeneration states respectively, thus ensuring continuous separation and purification of the high-pressure and low-temperature oxygen-enriched mixed gas.

**Table 2**

| Pressure swing adsorption tower | Circulation sequence chart of pressure swing adsorption purification system of six towers | | | | | | | | | | | |
|---|---|---|---|---|---|---|---|---|---|---|---|---|
| | First step | Second step | | | Third step | | | | Fourth step | | | |
| FT1 | Gas generation by adsorption | Pressure equalization and pressure reduction | | | Vacuumizing | | | | Pressure equalization and pressure increase | | | |
| FT2 | | Adsorption | | Pressure equalization and pressure reduction | | | Vacuumizing | | | Pressure equalization and pressure increase | | |
| FT3 | Pressure equalization and pressure increase | | | Adsorption | | Pressure equalization and pressure reduction | | | | Vacuumizing | | |
| FT4 | Vacuum regeneration | Pressure equalization and pressure increase | | | | Adsorptio n | | Pressure equalization and pressure reduction | | | | |
| FT5 | | Vacuumizing | | Pressure equalization and pressure increase | | | | Adsorption | | | Pressure equalizatio n and pressure reduction | |
| FT6 | Pressure equalization and pressure reduction | | Vacuumizing | | | Pressure equalization and pressure increase | | | | | Adsorptio n | |

### Embodiment 3

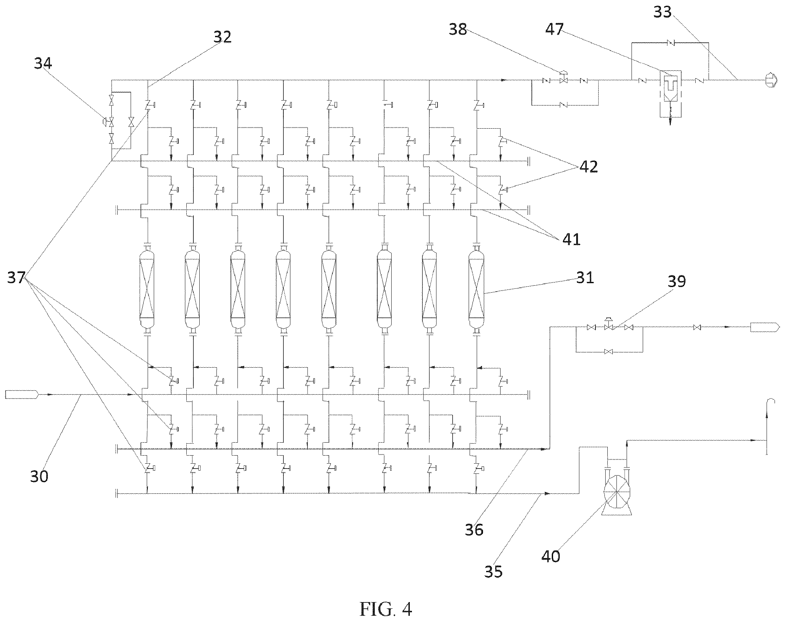

As shown in FIG. 1, FIG. 2, and FIG 4, a process of the energy-saving system for purifying and recycling oxygen from high-temperature oxygen-enriched flue gas includes the following steps.

S1: washing with water: high-temperature oxygen-enriched flue gas (80°C, oxygen concentration of 95% to 96%, water content of 1% to 2%, carbon dioxide content of 100 ppm, and nitrogen+argon content of 2%) with a gas flow rate of 16,000 Nm³/h and normal-temperature water at 32°C and 30 m³/h respectively enter a first water scrubber 7 through a flue gas inlet pipe 5 and a normal-temperature water pipe 6. Under an action of structured packing, the normal-temperature water is used as wash water to wash the high-temperature oxygen-enriched flue gas so as to remove particle impurities in the high-temperature oxygen-enriched flue gas. Meanwhile, the high-temperature oxygen-enriched flue gas contacts with the wash water for heat exchange to obtain the oxygen-enriched mixed gas at 35°C, and the wash water after heat exchange flows back from a drainage pipe 8. The oxygen-enriched mixed gas enters a second water scrubber 9 through a gas path, and under the action of the structured packing, the oxygen-enriched mixed gas contacts with low-temperature water at 7°C and 33 m³/h, which comes from a low-temperature heat exchanger 44 and serves as low-temperature wash water, for heat exchange to obtain the oxygen-enriched mixed gas at a temperature lower than 12°C, and the oxygen-enriched mixed gas at the temperature lower than 12°C is outputted from a top of the second water scrubber 9 through a gas outlet pipe 10.

The wash water of the first water scrubber 7 is subjected to a first closed-cycle circulation, and the first closed-cycle circulation is specifically as follows: the normal-temperature water at 32°C outside a battery limit enters the first water scrubber 7 through the normal-temperature water pipe 6, in the first water scrubber 7, the wash water contacts, at a normal temperature, with the oxygen-enriched flue gas at 80°C for washing and heat exchange, and the wash water subjected to washing and heat exchange flows back through the drainage pipe 8.

The wash water at 7°C of the second water scrubber 9 is subjected to a second closed-cycle circulation, and the second closed-cycle circulation is specifically as follows: backwater of the wash water of the second water scrubber 9 enters a hot side of the low-temperature heat exchanger 44 through a pipeline, low-temperature water obtained through heat exchange returns to the second water scrubber 9 through a pipeline, in the second water scrubber 9, the wash water at 7°C contacts, at a low temperature, with the oxygen-enriched mixed gas exhausted from the first water scrubber 7 for heat exchange under the action of the structured packing, and the wash water subjected to low-temperature heat exchange is transmitted to the hot side of the low-temperature heat exchanger 44 through a pipeline.

In the step, a first cold-side closed-cycle circulation is carried out on a cold side of a low-temperature heat exchanger 44, and the first cold-side closed-cycle circulation is specifically as follows: low-temperature water prepared by a water cooling set 43 enters the cold side of the low-temperature heat exchanger 44 through a pipeline, and medium-temperature water obtained through heat exchange returns to an inlet of the water cooling set 43 through a pipeline.

In S2: compressing and condensing: the oxygen-enriched mixed gas at a temperature lower than 12°C obtained after washing with water and cooling enters the compressor set 1 through the gas outlet pipe 10 to be compressed so as to obtain oxygen-enriched mixed gas at 0.4 MPa.G The oxygen-enriched mixed gas at 0.4 MPa.G enters a hot side of a compressor outlet heat exchanger 2 through a pipeline to carry out wall-to-wall heat exchange with low-temperature water at 5°C of a cold side thereof to obtain oxygen-enriched mixed gas at a temperature lower than 15°C and condensed water. The oxygen-enriched mixed gas at 0.4 MPa.G and 15°C and the condensed water enter a gas-liquid separation tank 3 for gas-liquid separation through pipelines, the condensed water is exhausted from a water outlet at a bottom of the gas-liquid separation tank 3 for recycling through a pipeline, and the oxygen-enriched mixed gas at 0.4 MPa.G and 15°C is outputted from a top of the gas-liquid separation tank 3 to a dry gas inlet pipe 11 and a pressure swing adsorption gas inlet pipe 30 through pipelines.

A second cold-side closed-cycle circulation is carried out on water of a cold side of the compressor outlet heat exchanger 2, and the second cold-side closed-cycle circulation is specifically as follows: the low-temperature water prepared by the water cooling set 43 enters the cold side of the compressor outlet heat exchanger 2 through a pipeline, and the medium-temperature water obtained through heat exchange returns to the inlet of the water cooling set 43 through a pipeline.

In S3: temperature swing adsorption isobaric drying and pressure swing adsorption purification: a combined process of temperature swing adsorption isobaric drying and pressure swing adsorption purification is employed in the step, the high-pressure and low-temperature oxygen-enriched mixed gas is equally divided into two gas sources, wherein one gas source enters a temperature swing adsorption isobaric drying mechanism 45 to remove excess water, so as to obtain low-dew-point oxygen-enriched flue gas, and the low-dew-point oxygen-enriched flue gas is outputted through a dry product gas header pipe 20. The other gas source enters a pressure swing adsorption purification mechanism 46 to remove excess water, carbon dioxide and nitrogen, so as to obtain low-dew-point high-purity oxygen, and the low-dew-point high-purity oxygen is outputted through a pressure swing adsorption product gas pipe 33. The low-dew-point oxygen-enriched flue gas outputted through the dry product gas header pipe 20 is inputted into the pressure swing adsorption product gas pipe 33, and mixed with the low-dew-point high-purity oxygen outputted through the pressure swing adsorption product gas pipe 33, so that a purity of final product oxygen is higher than 98.5%, and then mixed gas is inputted into a dedusting and filtering mechanism 4.

In S4: dedusting and filtering: the product oxygen with the purity higher than 98.5% enters the dedusting and filtering system 4, so that a dust content of the product oxygen is less than or equal to 1 µm, and finally, the product oxygen is outputted through a pipeline P9 for recycling.

A circulation sequence of the temperature swing adsorption isobaric drying mechanism 45 is shown in Table 1, and specific working steps are as follows.

In step A1, adsorption is carried out through a first adsorption tower 16, and hot blowing is carried out through a second adsorption tower 17. A part of oxygen-enriched mixed gas is transmitted to the first adsorption tower 16 from the dry gas inlet pipe 11 through a first on-off valve 28, moisture in the oxygen-enriched mixed gas is adsorbed, dehydrated and dried in the first adsorption tower 16, and dried gas passes through a first output pipe 18 and the dry product gas header pipe 20 in sequence to be outputted to the pressure swing adsorption product gas pipe 33 for mixing. The other part of oxygen-enriched mixed gas is transmitted to a pre-drying tower 21 through a third gas transmission pipe 14 for pre-drying, and then heated to 150°C to 170°C through a heater 22, and then enters the second adsorption tower 17 through a fifth gas transmission pipe 23. Hot blowing is continuously carried out on the second adsorption tower 17 for 4 hours, mixed gas after hot blowing passes through a seventh gas transmission pipe 27, a sixth gas transmission pipe 26, and a fourth gas transmission pipe 15 in sequence to enter a condenser 24. Moisture in the mixed gas is condensed in the condenser 24, and the moisture is exhausted from the system through a gas-liquid separator 25. The remaining mixed gas returns to the dry gas inlet pipe 11 from a top of the gas-liquid separator 25.

In step A2, adsorption is carried out through the first adsorption tower 16, and cold blowing is carried out through the second adsorption tower 17. A part of oxygen-enriched mixed gas is transmitted to the first adsorption tower 16 from the dry gas inlet pipe 11 through the first on-off valve 28, moisture in the oxygen-enriched mixed gas is adsorbed, dehydrated and dried in the first adsorption tower 16, and dried gas passes through the first output pipe 18 and the dry product gas header pipe 20 in sequence to be outputted to the pressure swing adsorption product gas pipe 33 for mixing. The other part of oxygen-enriched mixed gas passes through the third gas transmission pipe 14, the sixth gas transmission pipe 26, and the seventh gas transmission pipe 27 in sequence to be inputted into the second gas transmission pipe 13, and finally enters the second adsorption tower 17. Cold blowing is continuously carried out on the second adsorption tower 17 for 1 hour to 4 hours, mixed gas after cold blowing passes through a second output pipe 19 and the fifth gas transmission pipe 23 in sequence to enter the heater 22. The mixed gas enters the pre-drying tower 21 after being heated, then hot blowing is carried out on the pre-drying tower 21, and the mixed gas after hot blowing passes through the third gas transmission pipe 14 and the fourth gas transmission pipe 15 in sequence to enter the condenser 24. Moisture in the mixed gas is condensed in the condenser 24, and the moisture is exhausted from the system through the gas-liquid separator 25. The remaining mixed gas returns to the dry gas inlet pipe 11 from the top of the gas-liquid separator 25.

In step A3, adsorption is carried out through the second adsorption tower 17, and hot blowing is carried out through the first adsorption tower 16. A part of oxygen-enriched mixed gas is transmitted to the second adsorption tower 17 from the dry gas inlet pipe 11 through the second gas transmission pipe 13, moisture in the oxygen-enriched mixed gas is adsorbed, dehydrated and dried in the second adsorption tower 17, and dried gas passes through the second output pipe 19 and the dry product gas header pipe 20 in sequence to be outputted to the pressure swing adsorption product gas pipe 33 for mixing. The other part of oxygen-enriched mixed gas is transmitted to the pre-drying tower 21 through the third gas transmission pipe 14 for pre-drying, and then heated to 150°C to 170°C through the heater 22, and then passes through the fifth gas transmission pipe 23 and the first output pipe 18 in sequence to enter the first adsorption tower 16. Hot blowing is continuously carried out on the first adsorption tower 16 for 4 hours, mixed gas after hot blowing passes through the seventh gas transmission pipe 27, the sixth gas transmission pipe 26, and the fourth gas transmission pipe 15 in sequence to enter the condenser 24. Moisture in the mixed gas is condensed in the condenser 24, and the moisture is exhausted from the system through the gas-liquid separator 25. The remaining mixed gas returns to the dry gas inlet pipe 11 from the top of the gas-liquid separator 25.

In step A4, adsorption is carried out through the second adsorption tower 17, and cold blowing is carried out through the first adsorption tower 16. A part of oxygen-enriched mixed gas is transmitted to the second adsorption tower 17 from the dry gas inlet pipe 11 through the second gas transmission pipe 13, moisture in the oxygen-enriched mixed gas is adsorbed, dehydrated and dried in the second adsorption tower 17, and dried gas passes through the second output pipe 19 and the dry product gas header pipe 20 to be outputted to the pressure swing adsorption product gas pipe 33 for mixing. The other part of oxygen-enriched mixed gas passes through the third gas transmission pipe 14, the sixth gas transmission pipe 26, and the seventh gas transmission pipe 27 in sequence to be inputted into the first adsorption tower 16, cold blowing is continuously carried out on the first adsorption tower 16 for 1 hour to 4 hours, mixed gas after cold blowing passes through the first output pipe 18 and the fifth gas transmission pipe 23 in sequence to enter the heater 22. The mixed gas enters the pre-drying tower 21 after being heated, then hot blowing is carried out on the pre-drying tower 21, and the mixed gas after hot blowing passes through the third gas transmission pipe 14 and the fourth gas transmission pipe 15 in sequence to enter the condenser 24. Moisture in the mixed gas is condensed in the condenser 24, and the moisture is exhausted from the system through the gas-liquid separator 25. The remaining mixed gas returns to the dry gas inlet pipe 11 from the top of the gas-liquid separator 25.

In step A5, steps A1 to A3 are repeated to realize continuous drying of the high-pressure and low-temperature oxygen-enriched mixed gas, so as to obtain mixed gas with a dew point lower than -47°C and a water content lower than 50 ppm.

A circulation sequence of the pressure swing adsorption purification mechanism 46 is shown in Table 3, and specific working steps are as follows.

A total of eight pressure swing adsorption towers 31 (FT1+FT2, FT1, FT2, FT3, FT4, FT5, FT6, FT7, and FT8) are provided. Now, taking one pressure swing adsorption tower 31 (FT1) as an example, whole process steps of a main flow are described, and the remaining pressure swing adsorption towers 31 have the same process steps. The pressure equalizing mechanism includes three pressure equalizing pipes 41.

In step B1: adsorption: the high-pressure and low-temperature oxygen-enriched mixed gas transmitted from the pressure swing adsorption gas inlet pipe 30 enters the pressure swing adsorption tower 31 (FT1) through a pipeline, wherein water, carbon dioxide and nitrogen impurity ingredients are selectively adsorbed by various adsorbents filled in the pressure swing adsorption tower 31 in sequence, and obtained product oxygen with a carbon dioxide content lower than 50 ppm, a water content lower than 50 ppm, and an oxygen content higher than 99% is exhausted through the pressure swing adsorption gas outlet pipe 32. After pressure stabilization by a pressure regulating valve 38, most of the product oxygen is transmitted to the dedusting and filtering mechanism 4 through the pressure swing adsorption product gas pipe 33 to filter dust of an adsorbent, so as to control a dust content in the product oxygen to be less than 1 µm, and a small part of the product oxygen is used for final pressure increase of the remaining pressure swing adsorption towers 31 through the first regulating valve 34. With progress of adsorption, when a front edge of impurities (i.e., adsorption front edge) rises to a certain height close to an adsorption bed, a third on-off valve 37 on a connecting pipeline between the pressure swing adsorption tower and the pressure swing adsorption gas inlet pipe 30 and a third shutoff valve 37 installed on the pressure swing adsorption gas outlet pipe 32 are closed to stop adsorption. At the moment, a section of adsorbent unsaturated in adsorption is still left between the adsorption front edge and an outlet of the adsorption bed, which is called a reserved section.

In step B2: first pressure equalization and pressure reduction: after an adsorption process is completed, a pressure equalizing and switching valve 42 installed on a connecting pipeline between a first pressure equalizing pipe 41 and the pressure swing adsorption gas output pipe 32, and a pressure equalizing and switching valve 42 on a connecting pipeline between the pressure equalizing pipe 41 and the other pressure swing adsorption gas output pipe 32 are opened, and product oxygen with a higher pressure in the pressure swing adsorption tower 31 (FT1) is put into the pressure swing adsorption tower 31 (FT4) through the pressure equalizing pipe 41 until pressures of the two pressure swing adsorption towers 31 are basically equal. This process not only is a pressure reduction process, but also recycles oxygen in a closed space of a bed layer of the pressure swing adsorption tower 31. In the process, the adsorption front edge of the pressure swing adsorption tower 31 (FT1) will continue to move forward, but the adsorption front edge has not yet reached the outlet.

In step B3: second pressure equalization and pressure reduction: after the first pressure equalization and pressure reduction process is completed, a pressure equalizing and switching valve 42 installed on a connecting pipeline between a second pressure equalizing pipe 41 and the pressure swing adsorption gas output pipe 32, and a pressure equalizing and switching valve 42 on a connecting pipeline between the pressure equalizing pipe 41 and the other pressure swing adsorption gas output pipe 32 are opened, and product oxygen with a higher pressure in the pressure swing adsorption tower 31 (FT1) is put into the pressure swing adsorption tower 31 (FT5) through the pressure equalizing pipe 41 for second pressure equalization and pressure reduction of the pressure swing adsorption towers 31. The oxygen in the closed space of the bed layer of the pressure swing adsorption tower 31 (FT1) is recycled continuously in the process, and meanwhile, the adsorption front edge of the pressure swing adsorption tower 31 (FT1) after adsorption will continue to move forward, but the adsorption front edge has not yet reached the outlet.

In step B4: reverse exhaustion: after a continuous forward pressure reduction process is completed, the adsorption front edge of the pressure swing adsorption tower 31 (FT1) has basically reached the outlet of the bed layer. At the moment, a third on-off valve 37 installed on a connecting pipeline between the pressure swing adsorption recycling pipe 36 and the pressure swing adsorption tower 31 (FT1) is opened, and a pressure of the pressure swing adsorption tower 31 (FT1) is reduced to close to a normal pressure in a reverse adsorption direction. At the moment, adsorbed impurities such as water, carbon dioxide and nitrogen begin to be desorbed from the adsorbent. Reversely exhausted and desorbed gas returns to the gas inlet of the first water scrubber 7 through the recycling regulating valve 39.

In step B5: vacuumizing: after the reverse exhaustion is completed, a third cut-off valve 37 on a connecting pipeline between the pressure swing adsorption tower 31 (FT1) and the pressure swing adsorption exhaust pipe 35 is opened, and the pressure swing adsorption tower 31 (FT1) is vacuumized. At the moment, a lot of adsorbed impurities are desorbed and vented to a high point at site in a reverse adsorption direction through the vacuum pump 40.

In step B6: second pressure equalization and pressure increase: after the vacuumizing process is completed, a pressure equalizing and switching valve 42 on a connecting pipeline between the pressure equalizing pipe 41 for the second pressure equalization and pressure reduction and the pressure swing adsorption gas output pipe 32 of the pressure swing adsorption tower 31 (FT1), and a pressure equalizing and switching valve 42 on a connecting pipeline between the pressure swing adsorption gas output pipe 32 of the pressure swing adsorption tower 31 (FT4) and the pressure equalizing pipe 41 for the second pressure equalization and pressure reduction are opened, and second pressure equalization and pressure increase are carried out on the pressure swing adsorption tower 31 (FT1) by using the oxygen with the higher pressure during the second pressure equalization and pressure reduction of the pressure swing adsorption tower 31 (FT4).

In step B7: first pressure equalization and pressure increase: after the second pressure equalization and pressure increase process is completed, a pressure equalizing and switching valve 42 on a connecting pipeline between the pressure equalizing pipe 41 for the first pressure equalization and pressure reduction and the pressure swing adsorption gas output pipe 32 of the pressure swing adsorption tower 31 (FT1), and a pressure equalizing and switching valve 42 on a connecting pipeline between the pressure swing adsorption gas output pipe 32 of the pressure swing adsorption tower 31 (FT5) and the pressure equalizing pipe 41 for the first pressure equalization and pressure reduction are opened, and then the oxygen with the higher pressure in the pressure swing adsorption tower 31 (FT5) is recycled into the pressure swing adsorption tower 31 (FT1) which has just completed the second pressure equalization and pressure increase.

In step B8: final increase: after the two pressure equalization and pressure increase processes, the pressure of the pressure swing adsorption tower 31 (FT1) still does not reach an adsorption pressure. At the moment, a pressure equalizing and switching valve 42 on a connecting pipeline between the pressure equalizing pipe 41 connected with the first regulating valve 34 and the pressure swing adsorption gas outlet pipe 32 of the pressure swing adsorption tower 31 (FT1) is opened, and the pressure of the pressure swing adsorption tower 31 (FT1) is increased slowly with the product oxygen through the first regulating valve 34 until the pressure of the pressure swing adsorption tower 31 (FT1) is increased to the adsorption pressure.

After a series of pressure reduction and pressure increase processes above, the pressure swing adsorption tower 31 (FT1) completes a whole regeneration process, making preparations for next adsorption and entering a next adsorption circulation.

Process steps of the adsorption towers FT2 to 6 are completely the same as those of the FT1. One tower is always in an adsorption state, and five towers are in different regeneration states respectively, thus ensuring continuous separation and purification of the high-pressure and low-temperature oxygen-enriched mixed gas.

**Table 3**

| Ads orpti on tow er | Circulation sequence chart of pressure swing adsorption purification system of eight towers | | | | | | | | | | | |
|---|---|---|---|---|---|---|---|---|---|---|---|---|
| | First step | | | | | | Second step | | Third step | | | Fourth step |
| FT1 | Gas generation by adsorption | | | | | | Pressure equalization and pressure reduction | | Vacuum regeneration | | | Pressure equalizatio n and pressure increase |
| FT2 | Pressure equalization and pressure increase | | | | | Gas generation by adsorption | | Pressure equalization and pressure reduction | | Vacuum regeneration | | |
| FT3 | | | | | Pressure equalization and pressure | | Gas generation by adsorption | | Pressure equalization and pressure reduction | | Vacuum regeneration | |
| | | increase | | | | | | | | | | |
| FT4 | Regeneration | | | Pressure equalization and pressure increase | | | Gas generation by adsorption | | | Pressure equalization and pressure reduction | | Vacuum |
| FT5 | Vacuum regeneration | | | | | Pressure equalization and pressure increase | | Gas generation by adsorption | | | Pressure equalizatio n and pressure reduction | |
| FT6 | | Vacuum regeneration | | | | | | Pressure equalization and pressure increase | | Gas generation by adsorption | | Pressure equalizatio n and pressure reduction |
| FT7 | Pressure equalization and pressure reduction | | | Vacuum regeneration | | | | | Pressure equalizatio n and pressure increase | | A | |
| FT8 | Gas generation | | Pressure equalization and pressure reduction | | | Vacuum regeneration | | | | | Pressure equalizatio n and pressure increase | Adsorption |

## Claims

1. An energy-saving system for purifying and recycling oxygen from high-temperature oxygen-enriched flue gas, comprising a water washing mechanism for introducing the high-temperature oxygen-enriched flue gas, a compressor set (1) connected with the water washing system through a pipeline, a compressor outlet heat exchanger (2) connected with the compressor set (1) through a pipeline, a gas-liquid separation tank (3) connected with the compressor outlet heat exchanger (2) through a pipeline, a temperature swing adsorption isobaric drying mechanism (45) and a pressure swing adsorption purification mechanism (46) connected with the gas-liquid separation tank (3) through pipelines, a dedusting and filtering mechanism (4) for introducing gas treated by the temperature swing adsorption isobaric drying mechanism (45) and the pressure swing adsorption purification mechanism (46), and a cooling mechanism for cooling the water washing mechanism and the compressor outlet heat exchanger (2), wherein an output end of the temperature swing adsorption isobaric drying mechanism (45) is connected with an output end of the pressure swing adsorption purification mechanism (46) through a pipeline, and is connected with the dedusting and filtering mechanism (4) through a pipeline, and the pressure swing adsorption purification mechanism (46) is connected with the water washing mechanism;
wherein the water washing mechanism comprises a flue gas inlet pipe (5) for introducing the high-temperature oxygen-enriched flue gas and a normal-temperature water pipe (6) for filling normal-temperature water, a first water scrubber (7) respectively connected with the flue gas inlet pipe (5) and the normal-temperature water pipe (6), a drainage pipe (8) and a second water scrubber (9) connected with the first water scrubber (7), and a gas outlet pipe (10) respectively connected with the second water scrubber (9) and the compressor set (1), wherein the cooling mechanism is connected with the second water scrubber (9) through a pipeline, and the pressure swing adsorption purification mechanism (46) is connected with the first water scrubber (7);
wherein the cooling mechanism is connected with a water cooling set (43) connected with the compressor outlet heat exchanger (2) through a pipeline and a low-temperature heat exchanger (44) respectively connected with the water cooling set (43) and the second water scrubber (9) through pipelines.

2. The energy-saving system for purifying and recycling oxygen from high-temperature oxygen-enriched flue gas according to claim 1, wherein the temperature swing adsorption isobaric drying mechanism (45) comprises a dry gas inlet pipe (11) connected with the gas-liquid separation tank (3), a first gas transmission pipe (12), a second gas transmission pipe (13), and a third gas transmission pipe (14) connected with the dry gas inlet pipe (11), a fourth gas transmission pipe (15) connected with the third gas transmission pipe (14), a first adsorption tower (16) and a second adsorption tower (17) respectively connected with the first gas transmission pipe (12) and the second gas transmission pipe (13), a first output pipe (18) and a second output pipe (19) respectively connected with bottoms of the first adsorption tower (16) and the second adsorption tower (17), a dry product gas pipe (20) respectively connected with the first output pipe (18) and the second output pipe (19) and used for outputting product gas, a pre-drying tower (21) connected with the third gas transmission pipe (14), a heater (22) connected with the pre-drying tower (21), a fifth gas transmission pipe (23) with one end connected with the heater (22) and the other end respectively connected with the first output pipe (18) and the second output pipe (19) through pipelines, a condenser (24) connected with the fourth gas transmission pipe (15), a gas-liquid separator (25) connected with the condenser (24) through a pipeline, a sixth gas transmission pipe (26) connected between the third gas transmission pipe (14) and the fourth gas transmission pipe (15), a seventh gas transmission pipe (27) with one end connected with the sixth gas transmission pipe (26) and the other end respectively connected with the first output pipe (18) and the second output pipe (18) through pipelines, a plurality on-off valves (28) respectively installed on the first gas transmission pipe (12), the second gas transmission pipe (13), the third gas transmission pipe (14), the fourth gas transmission pipe (15), the first output pipe (18), the second output pipe (19), a connecting pipeline between the fifth gas transmission pipe (23) and the first output pipe (18), a connecting pipeline between the fifth gas transmission pipe (23) and the second output pipe (19), a connecting pipeline between the seventh gas transmission pipe (27) and the first output pipe (12), and a connecting pipeline between the seventh gas transmission pipe (27) and the second output pipe (19), and two second on-off valves (29) installed on the sixth gas transmission pipe (26), wherein the gas-liquid separator (25) is connected with the dry gas inlet pipe (11) through a pipeline, the seventh gas transmission pipe (27) is connected onto the sixth gas transmission pipe (26) and located between the two second on-off valves (29), and the dry product gas pipe (27) is connected with the output end of the pressure swing adsorption purification mechanism (46) through a pipeline.

3. The energy-saving system for purifying and recycling oxygen from high-temperature oxygen-enriched flue gas according to claim 2, wherein the pressure swing adsorption purification mechanism (46) comprises a pressure swing adsorption tower (31) connected with the gas-liquid separation tank (3), a plurality of pressure swing adsorption towers (31) with bottoms connected with a pressure swing adsorption gas inlet pipe (30) through pipelines, pressure swing adsorption gas output pipes (32) connected with tops of the pressure swing adsorption towers (31), a pressure swing adsorption product gas pipe (33) connected with each pressure swing adsorption gas output pipe (32) and the dry product gas pipe (20), a pressure equalizing mechanism connected with each pressure swing adsorption gas output pipe (32), a first regulating valve (34) with two ends respectively connected with the pressure swing adsorption product gas pipe (33) and the pressure equalizing mechanism, a pressure swing adsorption exhaust pipe (35) connected with the bottom of each pressure swing adsorption tower (31) through a pipeline, a pressure swing adsorption recycling pipe (36) with one end connected with the bottom of each pressure swing adsorption tower (31) through a pipeline and the other end connected with the first water scrubber (7), third on-off valves (37) respectively arranged on the pressure swing adsorption gas outlet pipe (32), a connecting pipeline between the pressure swing adsorption gas inlet pipe (30) and the bottom of the pressure swing adsorption tower (31), a connecting pipeline between the pressure swing adsorption exhaust pipe (35) and the bottom of the pressure swing adsorption tower (31), and a connecting pipeline between the pressure swing adsorption recycling pipe (36) and the bottom of the pressure swing adsorption tower (31), a pressure regulating valve (38) and a dedusting and filtering system (47) installed on the pressure swing adsorption product gas pipe (33), a recycling regulating valve (39) installed on the pressure swing adsorption recycling pipe (36), and a vacuum pump (40) installed on the pressure swing adsorption exhaust pipe (35), wherein the pressure swing adsorption product gas pipe (33) is connected with the dedusting and filtering mechanism.

4. The energy-saving system for purifying and recycling oxygen from high-temperature oxygen-enriched flue gas according to claim 3, wherein the pressure equalizing mechanism comprises a plurality of pressure equalizing pipes (41) respectively connected with each pressure swing adsorption gas output pipe (32) through a pipeline, and a pressure equalizing and switching valve (42) installed on a connecting pipeline between the pressure equalizing pipe (41) and each pressure swing adsorption gas output pipe (32), wherein the first regulating valve (34) is connected with one pressure equalizing pipe (41).

5. The energy-saving system for purifying and recycling oxygen from high-temperature oxygen-enriched flue gas according to claim 3, wherein at least three pressure swing adsorption towers (31) are provided.

6. A process of the energy-saving system for purifying and recycling oxygen from high-temperature oxygen-enriched flue gas according to any one of claims 1 to 5, comprising the following steps of:
S1: washing with water: washing, by the water washing mechanism, the introduced high-temperature oxygen-enriched flue gas with water to obtain low-temperature oxygen-enriched mixed gas, and inputting the low-temperature oxygen-enriched mixed gas into the compressor set (1); wherein the water washing mechanism comprises a flue gas inlet pipe (5) for introducing the high-temperature oxygen-enriched flue gas and a normal-temperature water pipe (6) for filling normal-temperature water, a first water scrubber (7) respectively connected with the flue gas inlet pipe (5) and the normal-temperature water pipe (6), a drainage pipe (8) and a second water scrubber (9) connected with the first water scrubber (7), and a gas outlet pipe (10) respectively connected with the second water scrubber (9) and the compressor set (1), wherein the cooling mechanism is connected with the second water scrubber (9) through a pipeline, and the pressure swing adsorption purification mechanism (46) is connected with the first water scrubber (7); wherein the cooling mechanism is connected with a water cooling set (43) connected with the compressor outlet heat exchanger (2) through a pipeline and a low-temperature heat exchanger (44) respectively connected with the water cooling set (43) and the second water scrubber (9) through pipelines;
S2: compressing and condensing: compressing and heating the low-temperature oxygen-enriched mixed gas in the compressor set (1), then inputting the same into the compressor outlet heat exchanger (2) for heat exchange and cooling, and inputting the cooled gas into the gas-liquid separation tank (3) for gas-liquid separation to obtain high-pressure and low-temperature oxygen-enriched mixed gas;
S3: temperature swing adsorption isobaric drying and pressure swing adsorption purification: employing a combined process of temperature swing adsorption isobaric drying and pressure swing adsorption purification in the step, equally dividing the high-pressure and low-temperature oxygen-enriched mixed gas into two streams, wherein one stream is inputted into the temperature swing adsorption isobaric drying mechanism (45) for drying to remove excess water, so as to obtain low-dew-point oxygen-enriched flue gas; and the other stream is inputted into the pressure swing adsorption purification mechanism (46) to remove excess water, carbon dioxide and nitrogen, so as to obtain low-dew-point high-purity oxygen, mixing the low-dew-point oxygen-enriched flue gas with the low-dew-point high-purity oxygen, and then inputting mixed gas into the dedusting and filtering mechanism (4); and
S4: dedusting and filtering the mixed gas of the low-dew-point oxygen-enriched flue gas and the low-dew-point high-purity oxygen through the dedusting and filtering mechanism (4), and outputting the mixed gas as product gas.

7. The energy-saving process for purifying and recycling oxygen from high-temperature oxygen-enriched flue gas according to claim 6, wherein the temperature swing adsorption isobaric drying in step S3 comprises the following steps of:
A1: hot blowing: passing a part of high-pressure and low-temperature oxygen-enriched mixed gas through the pre-drying tower (21) and the heater (22) sequentially from the dry gas inlet pipe (11) for processing to heat the gas to 150°C to 170°C, inputting the gas into the second adsorption tower (17) for hot blowing, passing the gas through the condenser (24) and the gas-liquid separator (25) sequentially for cooling and liquid water separation after hot blowing, finally inputting the gas into the dry gas inlet pipe (11), transmitting the gas to the first adsorption tower (16) for adsorption, and outputting the gas from the dry product gas header pipe (20) after adsorption by the first adsorption tower (16);
A2: cold blowing: passing a part of high-pressure and low-temperature oxygen-enriched mixed gas through the second adsorption tower (17) sequentially from the dry gas inlet pipe (11) for cold blowing, transmitting the gas to the heater (22) and heating the same to 150°C to 170°C, then inputting the gas into the pre-drying tower (21) for heating and regeneration, passing the gas through the condenser (24) and the gas-liquid separator (25) sequentially for cooling and liquid water separation after treating, finally inputting the gas into the dry gas inlet pipe (11), transmitting the gas to the first adsorption tower (16) for adsorption, and outputting the gas from the dry product gas header pipe (20) after adsorption by the first adsorption tower (16);
A3: exchanging operation of the first adsorption tower (16) and the second adsorption tower (17), so that the first adsorption tower (16) carries out hot blowing and cold blowing sequentially, and the second adsorption tower (17) carries out adsorption, and outputting other gas after adsorption from the dry gas header pipe (20); and
A4: repeating steps A1 to A3 to realize continuous drying of the high-pressure and low-temperature oxygen-enriched mixed gas.

8. The energy-saving process for purifying and recycling oxygen from high-temperature oxygen-enriched flue gas according to claim 6, wherein the pressure swing adsorption purification in step S3 comprises the following steps of:
B1: adsorption: inputting the high-pressure and low-temperature oxygen-enriched mixed gas into the pressure swing adsorption tower (31) from bottom to top from the pressure swing adsorption gas inlet pipe (30), after adsorption by the pressure swing adsorption tower (31), inputting the product gas into the pressure swing adsorption product gas pipe (33) from the top of the pressure swing adsorption tower (31) through the pressure swing adsorption gas output pipe (32), and finally inputting the gas into the dedusting and filtrating mechanism (4);
B2: pressure equalization and pressure reduction: inputting the high-pressure gas in the pressure swing adsorption tower (31) after adsorption into another pressure swing adsorption tower (31) through the pressure equalizing mechanism to balance gas pressures of the two towers;
B3. reverse exhaustion: in a reverse adsorption direction, inputting the gas in the pressure swing adsorption tower (31) after pressure equalization and pressure reduction into the first water scrubber (7) for recycling through the pressure swing adsorption recycling pipe (36), and reducing a gas pressure in the pressure swing adsorption tower (31) to a normal pressure;
B4. vacuumizing: in a reverse adsorption direction, pumping the gas in the pressure swing adsorption tower (31) after reverse exhaustion out through the vacuum pump (40), and exhausting the gas from the pressure swing adsorption exhaust pipe (35);
B5: pressure equalization and pressure increase: after vacuumizing, receiving, by the pressure swing adsorption tower (31), the high-pressure gas outputted from the pressure swing adsorption tower (31) in step B2 through the pressure equalizing mechanism to balance gas pressures of the two towers;
B6: final increase: passing the product gas through the pressure swing adsorption product gas pipe (33), the first regulating valve (34), the pressure equalizing mechanism, and the pressure swing adsorption gas output pipe (32) sequentially to input the product gas into the pressure swing adsorption tower (31) after pressure equalization and pressure increase, so that a gas pressure in the pressure swing adsorption tower (31) is evenly increased to an adsorption pressure; and
B7: repeating steps B1 to B6 to realize continuous removal of water, carbon dioxide, and nitrogen from the high-pressure and low-temperature oxygen-enriched mixed gas in the pressure swing adsorption purification mechanism (46).

## Patentansprüche

1. Energiesparendes System zum Reinigen und Rückgewinnen von Sauerstoff aus sauerstoffangereichertem Hochtemperatur-Rauchgas, umfassend einen Wasserwaschmechanismus zum Einleiten des sauerstoffangereicherten Hochtemperatur-Rauchgases, einen über eine Rohrleitung mit dem Wasserwaschmechanismus verbundenen Kompressorsatz (1), einen über eine Rohrleitung mit dem Kompressorsatz (1) verbundenen Kompressorauslasswärmetauscher (2), einen Gas-Flüssigkeits-Abscheidebehälter (3), der über eine Rohrleitung mit dem Kompressorauslasswärmetauscher (2) verbunden ist, einen isobaren Temperaturwechsel-Adsorptions-Trocknungsmechanismus (45) und einen Druckwechsel-Adsorptions-Reinigungsmechanismus (46), die über Rohrleitungen mit dem Gas-Flüssigkeits-Abscheidebehälter (3) verbunden sind, einen Entstaubungs- und Filtermechanismus (4) zum Einleiten von durch den isobaren Temperaturwechsel-Adsorptions-Trocknungsmechanismus (45) und den Druckwechsel-Adsorptions-Reinigungsmechanismus (46) behandeltem Gas, und einen Kühlmechanismus zum Kühlen des Wasserwaschmechanismus und des Kompressorauslasswärmetauschers (2), wobei ein Ausgangsende des isobaren Temperaturwechsel-Adsorptions-Trocknungsmechanismus (45) mit einem Ausgangsende des Druckwechsel-Adsorptions-Reinigungsmechanismus (46) durch eine Rohrleitung verbunden ist und mit dem Entstaubungs- und Filterungsmechanismus (4) durch eine Rohrleitung verbunden ist, und wobei der Druckwechsel-Adsorptions-Reinigungsmechanismus (46) mit dem Wasserwaschmechanismus verbunden ist,
wobei der Wasserwaschmechanismus ein Rauchgaseinlassrohr (5) zum Einleiten des sauerstoffangereicherten Hochtemperatur-Rauchgases und ein Normaltemperatur-Wasserrohr (6) zum Einfüllen von Normaltemperaturwasser, einen ersten Wasserwäscher (7), der jeweils mit dem Rauchgaseinlassrohr (5) und dem Normaltemperatur-Wasserrohr (6) verbunden ist, eine Drainageleitung (8) und einen zweiten Wasserwäscher (9), die mit dem ersten Wasserwäscher (7) verbunden sind, und eine Gasauslassleitung (10), die jeweils mit dem zweiten Wasserwäscher (9) und dem Kompressorsatz (1) verbunden ist, wobei der Kühlmechanismus mit dem zweiten Wasserwäscher (9) durch eine Rohrleitung verbunden ist und der Druckwechsel-Adsorptions-Reinigungsmechanismus (46) mit dem ersten Wasserwäscher (7) verbunden ist,
wobei der Kühlmechanismus mit einem Wasserkühlsatz (43), der über eine Rohrleitung mit dem Kompressorauslasswärmetauscher (2) verbunden ist, und einem Niedertemperaturwärmetauscher (44) verbunden ist, der über Rohrleitungen mit dem Wasserkühlsatz (43) bzw. dem zweiten Wasserwäscher (9) verbunden ist.

2. Energiesparendes System zum Reinigen und Rückgewinnen von Sauerstoff aus sauerstoffangereichertem Hochtemperatur-Rauchgas nach Anspruch 1, **dadurch gekennzeichnet, dass** wobei der isobaren Temperaturwechsel-Adsorptions-Trocknungsmechanismus (45) umfasst: ein mit dem Gas-Flüssigkeits-Abscheidebehälter (3) verbundenes Trockengas-Einlassrohr, ein erstes Gasübertragungsrohr, ein zweites Gasübertragungsrohr (13) und ein drittes Gasübertragungsrohr (14), die mit dem Trockengas-Einlassrohr (11) verbunden sind, ein viertes Gasübertragungsrohr (15), das mit dem dritten Gasübertragungsrohr (14) verbunden ist, einen ersten Adsorptionsturm (16) und einen zweiten Adsorptionsturm (17), die jeweils mit der ersten Gasübertragungsleitung (12) und der zweiten Gasübertragungsleitung (13) verbunden sind, eine erste Ausgangsleitung (18) und eine zweite Ausgangsleitung (19), die jeweils mit den Böden des ersten Adsorptionsturms (16) und des zweiten Adsorptionsturms (17) verbunden sind, eine Trockenproduktgasleitung (20), die jeweils mit der ersten Ausgangsleitung (18) und der zweiten Ausgangsleitung (19) verbunden ist und zur Ausgabe von Produktgas verwendet wird, einen Vortrocknungsturm (21), der mit dem dritten Gasübertragungsrohr (14) verbunden ist, einen Erhitzer (22), der mit dem Vortrocknungsturm (21) verbunden ist, ein fünftes Gasübertragungsrohr (23), deren eines Ende mit dem Erhitzer (22) verbunden ist und deren anderes Ende jeweils mit der ersten Ausgangsleitung (18) und der zweiten Ausgangsleitung (19) über Rohrleitungen verbunden ist, einen Kondensator (24), der mit dem vierten Gasübertragungsrohr (15) verbunden ist, einen Gas-Flüssigkeits-Abscheider (25), der mit dem Kondensator (24) über eine Rohrleitung verbunden ist, ein sechstes Gasübertragungsrohr (26), das zwischen dem dritten Gasübertragungsrohr (14) und dem vierten Gasübertragungsrohr (15) angeschlossen ist, ein siebtes Gasübertragungsrohr (27), dessen eines Ende mit dem sechsten Gasübertragungsrohr (26) verbunden ist und dessen anderes Ende über Rohrleitungen mit dem ersten Ausgangsrohr (18) bzw. dem zweiten Ausgangsrohr (18) verbunden ist, eine Vielzahl von Ein-Aus-Ventilen (28), die jeweils an dem ersten Gasübertragungsrohr (12), dem zweiten Gasübertragungsrohr (13), dem dritten Gasübertragungsrohr (14), dem vierten Gasübertragungsrohr (15), der ersten Ausgangsleitung (18), der zweiten Ausgangsleitung (19) angeordnet sind, eine Verbindungsleitung zwischen dem fünften Gasübertragungsrohr (23) und dem ersten Ausgangsrohr (18), eine Verbindungsleitung zwischen dem fünften Gasübertragungsrohr (23) und dem zweiten Ausgangsrohr (19), eine Verbindungsleitung zwischen dem siebten Gasübertragungsrohr (27) und dem ersten Ausgangsrohr (12), und eine Verbindungsleitung zwischen dem siebten Gasübertragungsrohr (27) und dem zweiten Ausgangsrohr (19), und zwei zweite Ein-Aus-Ventile (29), die an dem sechsten Gasübertragungsrohr (26) installiert sind, wobei der Gas-Flüssigkeits-Abscheider (25) durch eine Rohrleitung mit der trockengas-Einlassrohr (11) verbunden ist, das siebte Gasübertragungsrohr (27) mit dem sechsten Gasübertragungsrohr (26) verbunden ist und sich zwischen den beiden zweiten Ein-Aus-Ventilen (29) befindet, und die Trockenproduktgasleitung (20) mit dem Ausgangsende des Druckwechsel-Adsorptions-Reinigungsmechanismuses (46) über eine Rohrleitung verbunden ist.

3. Energiesparendes System zum Reinigen und Rückgewinnen von Sauerstoff aus sauerstoffangereichertem Hochtemperatur-Rauchgas nach Anspruch 2, **dadurch gekennzeichnet, dass** der Druckwechsel-Adsorptions-Reinigungsmechanismus (46) umfasst: einen Druckwechseladsorptionsturm (31), der mit dem Gas-Flüssigkeits-Abscheidebehälter (3) verbunden ist, eine Vielzahl von Druckwechseladsorptionstürmen (31) mit Böden, die über Rohrleitungen mit einer Druckwechseladsorptions-Gaseinlassleitung (30) verbunden sind, und Druckwechseladsorptionsgasausgangsleitungen (32), die mit den Oberseiten der Druckwechseladsorptionstürme (31) verbunden sind, eine Druckwechseladsorptions-Produktgasleitung (33), die mit jeder Druckwechseladsorptionsgasausgangsleitung (32) und der Trockenproduktgasleitung (20) verbunden ist, einen Druckausgleichsmechanismus, der mit jeder Druckwechseladsorptionsgasausgangsleitung (32) verbunden ist, ein erstes Regelventil (34), dessen zwei Enden jeweils mit der Druckwechseladsorptions-Produktgasleitung (33) und dem Druckausgleichsmechanismus verbunden sind, eine Druckwechseladsorptions-Abgasleitung (35), die über eine Rohrleitung mit dem Boden jedes Druckwechseladsorptionsturms (31) verbunden ist, eine Druckwechseladsorptions-Recyclingleitung (36), deren eines Ende über eine Rohrleitung mit dem Boden jedes Druckwechseladsorptionsturms (31) verbunden ist und deren anderes Ende mit dem ersten Wasserwäscher (7) verbunden ist, dritten Ein/Aus-Ventilen (37), die jeweils an der Druckwechseladsorptionsgasauslassleitung (32) angeordnet sind, einer Verbindungsleitung zwischen der Druckwechseladsorptions-Gaseinlassleitung (30) und dem Boden des Druckwechseladsorptionsturms (31), eine Verbindungsleitung zwischen dem Druckwechseladsorptionsabgasleitung (35) und dem Boden des Druckwechseladsorptionsturms (31), und eine Verbindungsleitung zwischen der Druckwechseladsorptions-Recyclingleitung (36) und dem Boden des Druckwechseladsorptionsturms, ein Druckregelventil (38) und ein Entstaubungs- und Filtersystem (47), die in der Druckwechseladsorptionsproduktgasleitung (33) installiert sind, ein Rückführungsregelventil (39), das an der Druckwechseladsorptions-Recyclingleitung (36) installiert ist, und eine Vakuumpumpe (39), die an der Druckwechseladsorptionsabgasleitung (35) installiert ist, wobei die Druckwechseladsorptionsproduktgasleitung (33) mit dem Entstaubungs- und Filtersystem verbunden ist.

4. Energiesparendes System zum Reinigen und Rückgewinnen von Sauerstoff aus sauerstoffangereichertem Hochtemperatur-Rauchgas nach Anspruch 3, **dadurch gekennzeichnet, dass** der Druckausgleichsmechanismus eine Vielzahl von Druckausgleichsrohren (41), die jeweils mit jeder Druckwechseladsorptionsgasausgangsleitung (32) über eine Rohrleitung verbunden sind, und ein Druckausgleichs- und Schaltventil (42) umfasst, das an einer Verbindungsrohrleitung zwischen dem Druckausgleichsrohr (41) und jeder Druckwechseladsorptionsgasausgangsleitung (32) installiert ist, wobei das erste Regelventil (34) mit einem Druckausgleichsrohr (41) verbunden ist.

5. Energiesparendes System zum Reinigen und Rückgewinnen von Sauerstoff aus sauerstoffangereichertem Hochtemperatur-Rauchgas nach Anspruch 3, **dadurch gekennzeichnet, dass** mindestens drei Druckwechseladsorptionstürme (31) vorgesehen sind.

6. Energiesparendes Verfahren zum Reinigen und Rückgewinnen von Sauerstoff aus sauerstoffangereichertem Hochtemperatur-Rauchgas nach einem der Ansprüche 1 bis 5, **dadurch gekennzeichnet, dass** es die folgenden Schritte umfasst:
S1: Waschen mit Wasser: Waschen des eingeleiteten sauerstoffangereicherten Mischgases durch den Wasserwaschmechanismus und Einleiten des sauerstoffangereicherten Mischgases mit niedriger Temperatur in den Kompressorsatz (1); wobei der Wasserwaschmechanismus umfasst: ein Rauchgaseinlassrohr (5) zum Einleiten des mit Sauerstoff angereicherten Hochtemperatur-Rauchgases und ein Normaltemperatur-Wasserrohr (6) zum Einfüllen von Normaltemperatur-Wasser, einen ersten Wasserwäscher (7), der jeweils mit dem Rauchgaseinlassrohr (5) und dem Normaltemperatur-Wasserrohr (6) verbunden ist, ein Abflussrohr (8) und einen zweiten Wasserwäscher (9), die mit dem ersten Wasserwäscher (7) verbunden sind, und ein Gasauslassrohr (10), das jeweils mit dem zweiten Wasserwäscher (9) und dem Kompressorsatz (1) verbunden ist, wobei der Kühlmechanismus mit dem zweiten Wasserwäscher (9) durch eine Rohrleitung verbunden ist und der Druckwechsel-Adsorptions-Reinigungsmechanismus (46) mit dem ersten Wasserwäscher (7) verbunden ist, wobei der Kühlmechanismus mit einem Wasserkühlungssatz (43), der mit dem Kompressorauslasswärmetauscher (2) über eine Rohrleitung verbunden ist, und einem Niedertemperaturwärmetauscher (44), der jeweils mit dem Wasserkühlungssatz (43) und dem zweiten Wasserwäscher (9) über Rohrleitungen verbunden ist, verbunden ist,
S2: Verdichten und Kondensieren: Verdichten und Erhitzen des sauerstoffangereicherten Mischgases mit niedriger Temperatur in der Kompressorsatz (1), dann Einleiten desselben in den Kompressorauslasswärmetauscher (2) zum Wärmeaustausch und zur Kühlung, und Einleiten des gekühlten Gases in den Gas-Flüssigkeits-Abscheidebehälter (3) zur Gas-Flüssigkeits-Trennung, um ein sauerstoffangereichertes Mischgas mit hohem Druck und niedriger Temperatur zu erhalten;
S3: Isobare Trocknen durch Temperaturwechseladsorption und Reinigung durch Druckwechseladsorption: Anwenden eines kombinierten Verfahrens aus isobarer Temperaturwechseladsorptionstrocknung und Druckwechseladsorptionsreinigung in dem Schritt, in dem das sauerstoffangereicherte Mischgas mit hohem Druck und niedriger Temperatur gleichmäßig in zwei Ströme aufgeteilt wird, wobei ein Strom in den isobaren Temperaturwechsel-Adsorptions-Trocknungsmechanismus (45) zum Trocknen eingegeben wird, um überschüssiges Wasser zu entfernen, um so sauerstoffangereichertes Rauchgas mit niedrigem Taupunkt zu erhalten; und der andere Strom in den Druckwechsel-Adsorptions-Reinigungsmechanismus (46) eingegeben wird, um überschüssiges Wasser, Kohlendioxid und Stickstoff zu entfernen, um hochreinen Sauerstoff mit niedrigem Taupunkt zu erhalten, Mischen des sauerstoffangereicherten Rauchgases mit niedrigem Taupunkt mit dem hochreinen Sauerstoff und anschließendes Einleiten des gemischten Gases in den Entstaubungs- und Filtermechanismus (4); und
S4: Entstauben und Filtern des Mischgases aus dem sauerstoffangereicherten Rauchgas mit niedrigem Taupunkt und dem hochreinen Sauerstoff mit niedrigem Taupunkt durch den Entstaubungs- und Filtermechanismus (4), und Ausgeben des Mischgases als Produktgas.

7. Energiesparendes Verfahren zum Reinigen und Rückgewinnen von Sauerstoff aus sauerstoffangereichertem Hochtemperatur-Rauchgas nach Anspruch 6, **dadurch gekennzeichnet, dass** wobei die isobaren Temperaturwechsel-Adsorptions-Trocknung in Schritt S3 die folgenden Schritte umfasst:
A1: Heißblasen: Leiten eines Teils des sauerstoffangereicherten Mischgases mit hohem Druck und niedriger Temperatur durch den Vortrocknungsturm (21) und den Erhitzer (22) nacheinander von dem Trockengas-Einlassrohr (11) zur Verarbeitung, um das Gas auf 150°C bis 170° C zu erwärmen, Einleiten des Gases in den zweiten Adsorptionsturm (17) zum Heißblasen, Einleiten des Gases nacheinander durch den Kondensator (24) und den Gas-Flüssigkeits-Abscheider (25) zur Kühlung und zur Flüssigwasserabscheidung nach dem Heißblasen, schließlich Einleiten des Gases in die Trockengaseinlassleitung (11), Einleiten des Gases zur Adsorption zum ersten Adsorptionsturm (16) und Ausgeben des Gases nach der Adsorption durch den ersten Adsorptionsturm (16) aus der Trockenproduktgas-Sammelleitung (20);
A2: Kaltblasen: Leiten eines Teils des sauerstoffangereicherten Mischgases mit hohem Druck und niedriger Temperatur durch den Adsorptionsturm (17) nacheinander von dem Trockengas-Einlassrohr (11) zur Kaltblasen, Weiterleiten des Gases zum Erhitzer (22) und Erwärmen desselben auf 150°C bis 170° C, dann das Gas in den Vortrocknungsturm (21) zum Erwärmen und Regenerieren eingeleitet wird, das Gas nacheinander durch den Kondensator (24) und den Gas-Flüssig-Abscheider (25) zur Kühlung und Flüssigwasserabscheidung nach der Behandlung geleitet wird, schließlich das Gas in die Trockengaseinlassleitung (11) eingeleitet wird, das Gas zur Adsorption in den ersten Adsorptionsturm (16) geleitet wird und das Gas nach der Adsorption durch den ersten Adsorptionsturm (16) aus der Trockenproduktgas-Sammelleitung (20) ausgegeben wird,
A3: Austauschen des Betriebs des ersten Adsorptionsturms (16) und des zweiten Adsorptionsturms (17), so dass der erste Adsorptionsturm (16) nacheinander ein Heißblasen und ein Kaltblasen durchführt und der zweite Adsorptionsturm (17) eine Adsorption durchführt, und Ausgeben von anderem Gas nach der Adsorption aus dem Trockenproduktgas-Sammelrohr (20); und
A4: Wiederholen der Schritte A1 bis A3, um eine kontinuierliche Trocknung des sauerstoffangereicherten Mischgases mit hohem Druck und niedriger Temperatur zu erreichen.

8. Energiesparendes Verfahren zum Reinigen und Rückgewinnen von Sauerstoff aus sauerstoffangereichertem Hochtemperatur-Rauchgas nach Anspruch 6, **dadurch gekennzeichnet, dass** die Druckwechsel-Adsorptions-Reinigung in Schritt S3 die folgenden Schritte umfasst:
B1: Adsorption: Einleiten des sauerstoffangereicherten Mischgases mit hohem Druck und niedriger Temperatur in den Druckwechseladsorptionsturm (31) von unten nach oben aus der Druckwechseladsorptions-Gaseinlassleitung (30), und nach der Adsorption durch den Druckwechseladsorptionsturm (31), Einleiten des Produktgases in die Druckwechseladsorptionsproduktgasleitung (33) vom oberen Ende des Druckwechseladsorptionsturms (31) durch die Druckwechseladsorptionsgasausgangsleitungen (32) und schließlich Einleiten des Gases in den Entstaubungs- und Filtriermechanismus (4);
B2: Druckausgleichung und Druckreduzierung: Zuführung des Hochdruckgases im Druckwechseladsorptionsturm (31) nach der Adsorption in einen anderen Druckwechseladsorptionsturm (31) durch den Druckausgleichsmechanismus, um die Gasdrücke der beiden Türme auszugleichen;
B3: umgekehrte Absaugung: in umgekehrter Adsorptionsrichtung, Einleiten des Gases im Druckwechseladsorptionsturm (31) nach Druckausgleichung und Druckreduzierung in den ersten Wasserwäscher (7) zur Rückführung durch die Druckwechseladsorptions-Recyclingleitung (36) und Reduzieren eines Gasdrucks im Druckwechseladsorptionsturm (31) auf einen normalen Druck;
B4: Vakuumieren: in umgekehrter Adsorptionsrichtung, Abpumpen des Gases im Druckwechseladsorptionsturm (31) nach umgekehrter Absaugung durch die Vakuumpumpe (40) und Absaugen des Gases aus der Druckwechseladsorptions-Abgasleitung (35);
B5: Druckausgleichung und Druckreduzierung: Zuführung des Hochdruckgases im Druckwechseladsorptionsturm (31) nach der Adsorption in einen anderen Druckwechseladsorptionsturm (31) durch den Druckausgleichsmechanismus, um die Gasdrücke der beiden Türme auszugleichen;
B6: Endgültige Erhöhung: Durchleiten des Produktgases durch die Druckwechseladsorptionsproduktgasleitung (33), das erste Regelventil (34), den Druckausgleichsmechanismus und die Druckwechseladsorptionsgasausgangsleitungen (32) nacheinander, um das Produktgas nach der Druckausgleichung und der Druckerhöhung in den Druckwechseladsorptionsturm (31) einzuleiten, so dass ein Gasdruck in dem Druckwechseladsorptionsturm (31) gleichmäßig auf einen Adsorptionsdruck erhöht wird, und
B7: Wiederholung der Schritte B1 bis B6, um eine kontinuierliche Entfernung von Wasser, Kohlendioxid und Stickstoff aus dem sauerstoffangereicherten Mischgases mit hohem Druck und niedriger Temperatur im Druckwechsel-Adsorptions-Reinigungsmechanismus (46) zu realisieren.

## Revendications

1. Système d'économie d'énergie pour la purification et le recyclage de l'oxygène d'un gaz de combustion enrichi en oxygène à haute température, comprenant un mécanisme de lavage à l'eau pour introduire un gaz de combustion enrichi en oxygène à haute température, un groupe compresseur (1) connecté au système de lavage à l'eau par l'intermédiaire d'une tuyauterie, un échangeur de chaleur de sortie du compresseur (2) connecté au groupe compresseur (1) par l'intermédiaire d'une tuyauterie, un réservoir de séparation gaz-liquide (3) connecté à l'échangeur de chaleur de sortie du compresseur (2) par l'intermédiaire d'une tuyauterie, un mécanisme de séchage isobare par adsorption à variation de température (45) et un mécanisme de purification par adsorption à variation de pression (46) connectés au réservoir de séparation gaz-liquide (3) par l'intermédiaire de tuyauteries, un mécanisme de dépoussiérage et de filtration (4) pour introduire le gaz traité par le mécanisme de séchage isobare par adsorption à variation de température (45) et le mécanisme de purification par adsorption à variation de pression (46), et un mécanisme de refroidissement pour refroidir le mécanisme de lavage à l'eau et l'échangeur de chaleur de sortie du compresseur (2), dans lequel une extrémité de sortie du mécanisme de séchage isobare par adsorption à variation de température (45) est connectée à une extrémité de sortie du mécanisme de purification par adsorption à variation de pression (46) par l'intermédiaire d'une tuyauterie et est connectée au mécanisme de dépoussiérage et de filtration (4) par l'intermédiaire d'une tuyauterie, et le mécanisme de purification par adsorption à variation de pression (46) est connecté au mécanisme de lavage à l'eau ;
dans lequel le mécanisme de lavage à l'eau comprend un tuyau d'entrée de gaz de combustion (5) pour introduire le gaz de combustion enrichi en oxygène à haute température et un tuyau d'eau à température normale (6) pour remplir de l'eau à température normale, un premier épurateur d'eau (7) connecté respectivement au tuyau d'entrée de gaz de combustion (5) et au tuyau d'eau à température normale (6), un tuyau de drainage (8) et un deuxième épurateur d'eau (9) connectés au premier épurateur d'eau (7), et un tuyau de sortie de gaz (10) connecté respectivement au deuxième épurateur d'eau (9) et au groupe compresseur (1), dans lequel le mécanisme de refroidissement est connecté au deuxième épurateur d'eau (9) par l'intermédiaire d'une tuyauterie, et le mécanisme de purification par adsorption à variation de pression (46) est connecté au premier épurateur d'eau (7) ;
dans lequel le mécanisme de refroidissement est connecté à un ensemble de refroidissement à l'eau (43) connecté à l'échangeur de chaleur de sortie du compresseur (2) par l'intermédiaire d'une tuyauterie et à un échangeur de chaleur à basse température (44) respectivement connecté à l'ensemble de refroidissement à l'eau (43) et au deuxième épurateur d'eau (9) par l'intermédiaire de tuyauteries.

2. Système d'économie d'énergie pour la purification et le recyclage de l'oxygène d'un gaz de combustion enrichi en oxygène à haute température selon la revendication 1, dans lequel le mécanisme de séchage isobare par adsorption à variation de température (45) comprend un tuyau d'entrée de gaz sec (11) connecté au réservoir de séparation gaz-liquide (3), un premier tuyau de transfert de gaz (12), un deuxième tuyau de transfert de gaz (13) et un troisième tuyau de transfert de gaz (14) connecté au tuyau d'entrée de gaz sec (11), un quatrième tuyau transfert de gaz (15) connecté à la troisième tuyau transfert de gaz (14), une première tour d'adsorption (16) et une deuxième tour d'adsorption (17) connectées respectivement au premier tuyau de transfert de gaz (12) et au deuxième tuyau de transfert de gaz (13), un premier tuyau de sortie (18) et un deuxième tuyau de sortie (19) connectés respectivement aux fonds de la première tour d'adsorption (16) et de la deuxième tour d'adsorption (17), un tuyau de gaz produit sec (20) connecté respectivement au premier tuyau de sortie (18) et au deuxième tuyau de sortie (19) et utilisé pour échapper le gaz produit, une tour de pré-séchage (21) connectée au troisième tuyau de transfert de gaz (14), un réchauffeur (22) connecté à la tour de pré-séchage (21), un cinquième tuyau de transfert de gaz (23) dont une extrémité est connectée au réchauffeur (22) et l'autre extrémité est connectée respectivement au premier tuyau de sortie (18) et au deuxième tuyau de sortie (19) par l'intermédiaire de tuyauteries, un condenseur (24) connecté au quatrième tuyau de transfert de gaz (15), un séparateur gaz-liquide (25) connecté au condenseur (24) par l'intermédiaire d'une tuyauterie, un sixième tuyau de transfert de gaz (26) connecté entre le troisième tuyau de transfert de gaz (14) et le quatrième tuyau de transfert de gaz (15), un septième tuyau de transfert de gaz (27) dont une extrémité est connectée au sixième tuyau de transfert de gaz (26) et l'autre extrémité est connectée respectivement au premier tuyau de sortie (18) et au deuxième tuyau de sortie (18) par l'intermédiaire de tuyauteries, une pluralité de vannes marche-arrêt (28) montées respectivement sur le premier tuyau de transfert de gaz (12), le deuxième tuyau de transfert de gaz (13), le troisième tuyau de transfert de gaz (14), le quatrième tuyau de transfert de gaz (15), le premier tuyau de sortie (18), le deuxième tuyau de sortie (19), une tuyauterie de connexion entre le cinquième tuyau de transfert de gaz (23) et le premier tuyau de sortie (18), une tuyauterie de connexion entre le cinquième tuyau d'entrée de gaz sec (23) et le deuxième tuyau de sortie (19), une tuyauterie de connexion entre la septième tuyau de transfert de gaz sec (27) et le premier tuyau de sortie (12), et une tuyauterie de connexion entre le septième tuyau de transfert de gaz sec (27) et le deuxième tuyau de sortie (19), et deux deuxièmes vannes marche-arrêt (29) montées sur le sixième tuyau de transfert de gaz sec (26), dans lequel le séparateur gaz-liquide (25) est connecté au tuyau d'entrée de gaz sec (11) par l'intermédiaire d'une tuyauterie, le septième tuyau de transfert de gaz (27) est connecté au sixième tuyau de transfert de gaz (26) et situé entre les deux deuxièmes vannes marche-arrêt (29), et le tuyau de gaz produit sec (27) est connecté à l'extrémité de sortie du mécanisme de purification par adsorption à variation de pression (46) par l'intermédiaire d'une tuyauterie.

3. Système d'économie d'énergie pour la purification et le recyclage de l'oxygène d'un gaz de combustion enrichi en oxygène à haute température selon la revendication 2, dans lequel le mécanisme de purification par adsorption à variation de pression (46) comprend une tour d'adsorption à variation de pression (31) connectée au réservoir de séparation gaz-liquide (3), une pluralité de tours d'adsorption à variation de pression (31) dont les fonds sont connectés à un tuyau d'entrée de gaz par adsorption à variation de pression (30) par l'intermédiaire de tuyauteries, des tuyaux de sortie de gaz par adsorption à variation de pression (32) connectés à sommets des tours d'adsorption à variation de pression (31), un tuyau de gaz produit par adsorption à variation de pression (33) connecté à chaque tuyau de sortie de gaz par adsorption à variation de pression (32) et le tuyau de gaz produit sec (20), un mécanisme d'équilibrage de la pression connecté à chaque tuyau de sortie de gaz par adsorption à variation de pression (32), une première vanne de régulation (34) sont deux extrémités sont connectées respectivement au tuyau de gaz produit par adsorption à variation de pression (33) et au mécanisme d'équilibrage de la pression, un tuyau d'échappement par adsorption à variation de pression (35) connecté au fond de chaque tour d'adsorption à variation de pression (31) par l'intermédiaire d'une tuyauterie, un tuyau de recyclage par adsorption à variation de pression (36) dont une extrémité est connectée au fond de chaque tour d'adsorption à variation de pression (31) par l'intermédiaire d'une tuyauterie et l'autre extrémité est connectée au premier épurateur d'eau (7), les troisièmes vannes marche-arrêt (37) disposées respectivement sur le tuyau de sortie de gaz par adsorption à variation de pression (32), une tuyauterie de connexion entre le tuyau d'entrée de gaz par adsorption à variation de pression (30) et le fond de la tour d'adsorption à variation de pression (31), une tuyauterie de connexion entre le tuyau d'échappement par adsorption à variation de pression (35) et le fond de la tour d'adsorption à variation de pression (31), et une tuyauterie de connexion entre le tuyau de recyclage par adsorption à variation de pression (36) et le fond de la tour d'adsorption à variation de pression (31), une vanne de régulation de pression (38) et un système de dépoussiérage et de filtration (47) montés sur le tuyau de gaz produit par adsorption à variation de pression (33), une vanne de régulation du recyclage (39) montée sur le tuyau de recyclage par adsorption à variation de pression (36), et une pompe à vide (40) montée sur le tuyau d'échappement par adsorption à variation de pression (35), dans lequel le tuyau de gaz produit par adsorption à variation de pression (33) est connecté au mécanisme de dépoussiérage et de filtration.

4. Système d'économie d'énergie pour la purification et le recyclage de l'oxygène d'un gaz de combustion enrichi en oxygène à haute température selon la revendication 3, dans lequel le mécanisme d'équilibrage de la pression comprend une pluralité de tuyaux d'équilibrage de pression (41) connectés respectivement à chaque tuyau de sortie de gaz par adsorption à variation de pression (32) par l'intermédiaire d'une tuyauterie, et une vanne d'équilibrage et de commutation de pression (42) montée sur une tuyauterie de connexion entre le tuyau d'équilibrage de pression (41) et chaque tuyau de sortie de gaz par adsorption à variation de pression (32), dans lequel la première vanne de régulation (34) est connectée à un tuyau d'équilibrage de pression (41).

5. Système d'économie d'énergie pour la purification et le recyclage de l'oxygène d'un gaz de combustion enrichi en oxygène à haute température selon la revendication 3, dans lequel au moins trois tours d'adsorption à variation de pression (31) sont prévues.

6. Procédé d'économie d'énergie pour la purification et le recyclage de l'oxygène d'un gaz de combustion enrichi en oxygène à haute température selon l'une quelconque des revendications 1 à 5, comprenant les étapes suivantes :
S1 : lavage à l'eau : laver, par le mécanisme de lavage à l'eau, un gaz de combustion enrichi en oxygène à haute température introduit avec de l'eau pour obtenir un gaz mélangé enrichi en oxygène à basse température, et introduire le gaz mélangé enrichi en oxygène à basse température dans le groupe compresseur (1) ; dans lequel le mécanisme de lavage à l'eau comprend un tuyau d'entrée de gaz de combustion (5) pour introduire le gaz de combustion enrichi en oxygène à haute température et un tuyau d'eau à température normale (6) pour remplir de l'eau à température normale, un premier épurateur d'eau (7) connecté respectivement au tuyau d'entrée de gaz de combustion (5) et au tuyau d'eau à température normale (6), un tuyau de drainage (8) et un deuxième épurateur d'eau (9) connectés au premier épurateur d'eau (7), et un tuyau de sortie de gaz (10) connecté respectivement au deuxième épurateur d'eau (9) et au groupe compresseur (1), dans lequel le mécanisme de refroidissement est connecté au deuxième épurateur d'eau (9) par l'intermédiaire d'une tuyauterie, et le mécanisme de purification par adsorption à variation de pression (46) est connecté au premier épurateur d'eau (7) ; dans lequel le mécanisme de refroidissement est connecté à un ensemble de refroidissement à l'eau (43) connecté à l'échangeur de chaleur de sortie du compresseur (2) par l'intermédiaire d'une tuyauterie et à un échangeur de chaleur à basse température (44) respectivement connecté à l'ensemble de refroidissement à l'eau (43) et au deuxième épurateur d'eau (9) par l'intermédiaire de tuyauteries ;
S2 : compression et condensation : compresser et réchauffer le gaz mélangé enrichi en oxygène à basse température dans le groupe compresseur (1), puis l'introduire dans l'échangeur de chaleur de sortie du compresseur (2) pour un échange de chaleur et un refroidissement, et introduire le gaz refroidi dans le réservoir de séparation gaz-liquide (3) pour une séparation gaz-liquide afin d'obtenir un gaz mélangé enrichi en oxygène à haute pression et à basse température ;
S3 : séchage isobare par adsorption à variation de température et purification par adsorption à variation de pression : mettre en oeuvre un processus combiné de séchage isobare par adsorption à variation de température et de purification par adsorption à variation de pression dans l'étape, diviser le gaz mélangé enrichi en oxygène à haute pression et à basse température en deux flux égaux,
dans lequel un flux est introduit dans le mécanisme de séchage isobare par adsorption à variation de température (45) pour le sécher afin d'éliminer l'excès d'eau, obtenant ainsi un gaz de combustion enrichi en oxygène à faible point de rosée ; et l'autre flux est introduit dans le mécanisme de purification par adsorption à variation de pression (46) pour éliminer l'excès d'eau, le dioxyde de carbone et l'azote, obtenant ainsi l'oxygène de haute pureté à faible point de rosée, mélanger le gaz de combustion enrichi en oxygène à faible point de rosée avec l'oxygène de haute pureté à faible point de rosée, puis introduire le gaz mélangé dans le mécanisme de dépoussiérage et de filtration (4) ; et
S4 : dépoussiérer et filtrer le gaz mélangé du gaz de combustion enrichi en oxygène à faible point de rosée et de l'oxygène de haute pureté à faible point de rosée à travers le mécanisme de dépoussiérage et de filtration (4), et sortir le gaz mélangé en tant que gaz produit.

7. Procédé d'économie d'énergie pour la purification et le recyclage de l'oxygène d'un gaz de combustion enrichi en oxygène à haute température selon la revendication 6, dans lequel le séchage isobare par adsorption à variation de température à l'étape S3 comprend les étapes suivantes :
A1 : soufflage à chaud : faire passer une partie du gaz mélangé enrichi en oxygène à haute pression et à basse température à travers successivement la tour de pré-séchage (21) et le réchauffeur (22) à partir du tuyau d'entrée de gaz sec (11) pour un traitement pour réchauffer le gaz à 1500 ° C à 170 ° C, introduire le gaz dans la deuxième tour d'adsorption (17) pour un soufflage à chaud, faire passer le gaz à travers successivement le condenseur (24) et le séparateur gaz-liquide (25) pour un refroidissement et une séparation d'eau-liquide après le réchauffage, souffler, enfin introduire le gaz dans le tuyau d'entrée de gaz sec (11), transférer le gaz à la première tour d'adsorption (16) pour une adsorption, et sortir le gaz du tuyau de gaz produit sec (20) après l'adsorption par la première tour d'adsorption (16) ;
A2 : soufflage à froid : faire passer une partie du gaz mélangé enrichi en oxygène à haute pression et à basse température à travers successivement la deuxième tour d'adsorption (l7) à partir du tuyau d'entrée de gaz sec (11) pour un soufflage à froid, transférer le gaz au réchauffeur (22) et le réchauffer à 1500C à 1700C, puis introduire le gaz dans la tour de pré-séchage (21) pour un réchauffage et une régénération, faire passer le gaz à travers successivement le condenseur (24) et le séparateur gaz-liquide (25) pour un refroidissement et une séparation d'eau-liquide après le traitement, enfin introduire le gaz dans le tuyau d'entrée de gaz sec (11), transférer le gaz à la première tour d'adsorption (16) pour une adsorption, et sortir le gaz du tuyau de gaz produit sec (20) après l'adsorption par la première tour d'adsorption (16) ;
A3 : échanger les fonctionnements de la première tour d'adsorption (16) et de la deuxième tour d'adsorption (17), de sorte que la première tour d'adsorption (16) effectue successivement le soufflage à chaud et le soufflage à froid et que la deuxième tour d'adsorption (17) met en oeuvre l'adsorption, et sortir d'autres gaz du tuyau de gaz produit sec (20) ; et
A4 : répéter les étapes A1 à A3 pour réaliser un séchage continu du gaz mélangé enrichi en oxygène à haute pression et à basse température.

8. Procédé d'économie d'énergie pour la purification et le recyclage de l'oxygène d'un gaz de combustion enrichi en oxygène à haute température selon la revendication 6, dans lequel la purification par adsorption à variation de pression à l'étape S3 comprend les étapes suivantes :
B1 : adsorption : introduire le gaz mélangé enrichi en oxygène à haute pression et à basse température dans la tour d'adsorption à variation de pression (31) de bas en haut à partir du tuyau d'entrée de gaz par adsorption à variation de pression (30), après l'adsorption par la tour d'adsorption à variation de pression (31), introduire le gaz produit dans le tuyau de gaz produit par adsorption à variation de pression (33) à partir du haut de la tour d'adsorption à variation de pression (31) à travers le tuyau de sortie de gaz par adsorption à variation de pression (32), et enfin introduire le gaz dans le mécanisme de dépoussiérage et de filtration (4) ;
B2 : égalisation de la pression et réduction de la pression : introduire le gaz à haute pression dans la tour d'adsorption à variation de pression (31) après l'adsorption dans une autre tour d'adsorption à variation de pression (31) à travers le mécanisme d'équilibrage de la pression pour équilibrer les pressions de gaz dans les deux tours ;
B3 : échappement inverse : dans un sens inverse de l'adsorption, introduire le gaz dans la tour d'adsorption à variation de pression (31) après l'égalisation de la pression et la réduction de la pression dans le premier épurateur d'eau (7) pour un recyclage à travers le tuyau de recyclage par adsorption à variation de pression (36), et réduire la pression du gaz dans la tour d'adsorption à variation de pression (31) à une pression normale ;
B4 : mise sous vide : dans un sens inverse de l'adsorption, pomper le gaz dans la tour d'adsorption à variation de pression (31) après l'échappement inverse par la pompe à vide (40) et échapper le gaz du tuyau d'échappement par adsorption à variation de pression (35) ;
B5 : équilibrage de la pression et augmentation de la pression : après la mise sous vide, récupérer, par la tour d'adsorption à variation de pression (31), le gaz à haute pression sorti de la tour d'adsorption à variation de pression (31) à l'étape B2 à travers le mécanisme d'équilibrage de la pression pour équilibrer les pressions de gaz dans les deux tours ;
B6 : augmentation finale : faire passer le gaz produit à travers successivement le tuyau de gaz produit par adsorption à variation de pression (33), la première vanne de régulation (34), le mécanisme d'équilibrage de la pression et le tuyau de sortie de gaz par adsorption à variation de pression (32) pour introduire le gaz produit dans la tour d'adsorption à variation de pression (31) après l'égalisation de la pression et l'augmentation de la pression, de sorte qu'une pression du gaz dans la tour d'adsorption à variation de pression (31) soit augmentée de manière régulière à une pression d'adsorption ; et
B7 : répéter les étapes B1 à B6 pour réaliser une élimination continue de l'eau, du dioxyde de carbone et de l'azote du gaz mélangé enrichi en oxygène à haute pression et à basse température dans le mécanisme de purification par adsorption à variation de pression (46).
